# EUROPEAN PATENT SPECIFICATION

(11) **EP 1 506 938 B1**
(45) Date of publication and mention of the grant of the patent: **31.03.2010**
(21) Application number: 04004479.4
(22) Date of filing: 27.02.2004
(51) Int. Cl.: D01F 11/12, C01B 31/02

(54) **Method for manufacturing a carbon nanotube structure and carbon nanotube transfer body**
Verfahren zur Herstellung einer Kohlenstoff-Nanoröhren-Struktur und Kohlenstoffnanoröhrenkörper zur Übertragung
Procédé de préparation d'une structure de nanotubes de carbone et élément de transfert de nanotubes de carbone

(30) Priority: 24.07.2003 JP 2003279094
(43) Date of publication of application: 16.02.2005
(73) Proprietor: FUJI XEROX CO., LTD., Minato-ku, Tokyo, 107-0052 (JP)
(72) Inventor: Watanabe, Miho, Ashigarakami-gun Kanagawa (JP); Anazawa, Kazunori, Ashigarakami-gun Kanagawa (JP); Manabe, Chicara, Ashigarakami-gun Kanagawa (JP); Hirakata, Masaki, Ashigarakami-gun Kanagawa (JP); Kentaro, Kishi, Ashigarakami-gun Kanagawa (JP); Shigematsu, Taishi, Ashigarakami-gun Kanagawa (JP); Isozaki, Takashi, Ashigarakami-gun Kanagawa (JP); Watanabe, Hiroyuki, Ashigarakami-gun Kanagawa (JP); Ooma, Shigeki, Ashigarakami-gun Kanagawa (JP); Okada, Shinsuke, Ashigarakami-gun Kanagawa (JP)
(74) Representative: Forstmeyer, Dietmar

(56) References cited:
- WO-A-01/07694
- WO-A-97/32571
- US-A- 5 259 926
- US-B1- 6 342 276

## Description

### Field of the Invention and

### Related Art Statement

The present invention relates to a method of manufacturing a carbon nanotube structure with homogeneous characteristics, and a carbon nanotube transfer body which facilitates utilization of the obtained carbon nanotube structure.

Carbon nanotubes (CNTs), with their unique shape and characteristics, are being considered for various applications. Carbon nanotubes have a tubular shape of one-dimensional nature which is obtained by rolling one or more graphene sheets composed of six-membered rings of carbon atoms into a tube. Those that are formed from one graphene sheet are called single-wall nanotubes (SWNTs) while those that are formed from graphene sheet layers are calledmulti-wall nanotubes (MWNTs). SWNTs are about 1 nm indiameter whereas multi-wall carbon nanotubes measure several tens nm in diameter, and both are far thinner than their predecessors, which are called carbon fibers.

One of the characteristics of carbon nanotubes resides in that the aspect ratio of length to diameter is very large since the length of carbon nanotubes is on the order of micrometers. Carbon nanotubes are unique in their extremely rare nature of being both metallic and semi-conductive, owing to the fact that six-membered rings of carbon atoms in carbon nanotubes are arranged into a spiral. In addition, the electric conductivity of carbon nanotubes is very high and allows a current flow of 100 MA/cm² or more in terms of current density.

Carbon nanotubes excel not only in electrical characteristics but also in mechanical characteristics: distinct toughness, as attested by their Young's modulus exceeding 1 TPa, which belies their extreme lightness resulting frombeing formed solely of carbon atoms, and high elasticity and resiliency resulting from their cage structure. Having such various and excellent characteristics, carbon nanotubes are very appealing as industrial materials.

Applied researches that exploit the excellent characteristics of carbon nanotubes have been made extensively. To give a few examples, carbon nanotubes are added as a resin reinforcer or as a conductive composite material while another research utilizes carbon nanotubes as a probe of a scanning probe microscope. Carbon nanotubes have also been utilized as minute electron sources, field emission electronic devices, and flat displays. An application that is being developed is to use carbon nanotubes as a container for hydrogen storage.

Of those various applications of carbon nanotubes, applications as electronic materials and electronic devices are particularly attracting attention. Diodes, transistors, and other electronic devices that use carbon nanotubes have already been manufactured experimentally, and are expected to replace existing silicon semiconductor electronic devices. A handling technique on the order of nanometers is necessary to realize devices that use carbon nanotubes, as the ones mentioned in the above, fit for practical use.

It is very difficult in practice to position carbon nanotubes. Several techniques have hitherto been tried in an attempt to align carbon nanotubes successfully.
One of those techniques is to use a manipulator in a scanning electron microscope to pick up one or several carbon nanotubes and place the carbon nanotubes at desired positions. A modification of this technique uses a probe microscope to position a carbon nanotube. This technique is fine for basic research but takes too much time and labor to provide a practical solution.

Another technique that has been put into trial is to use electrophoresis to orient carbon nanotubes in a certain direction. The method is capable of aligning carbon nanotubes in one direction, but aligning carbon nanotubes in more than one direction by this technique is difficult and is not realistic.
Still another technique uses chemical vapor deposition (CVD). CVD is a method of forming a carbon nanotube by a chemical decomposition reaction of such material gas as acetylene gas, methane gas, or the like that contains carbon.

Amethod of aligning carbon nanotubes in a horizontal direction with respect to a substrate has been disclosed in J. Am. Chem. Soc. 121 (1996), on pages 7975 to 7976 by A. Cassell, N. Franklin, T. Tombler, E. Chan, J. Han, and H. Dai. The method uses a technique of forming Si pillars on a substrate, putting an additive on top of the pillars, and bridging the gaps between the pillars by carbon nanotubes by flowing methane gas. The method using this technique enables horizontal alignment of carbon nanotubes. However, the success rate of cross-linking with the method is very low and it is still difficult with this method to position carbon nanotubes as desired.
As described above, a technique capable of aligning one or more carbon nanotubes at a time satisfactorily is yet to be developed.

Meanwhile, methods of forming a carbon nanotube into a film to be wired or patterned are actually being developed. For instance, forming a carbon nanotube pattern by screen printing or photolithography has already been carried out. Those techniques (screen printing and photolithography) are superior in patterning a wide area at once, and are employed in patterning of electron sources of field emission displays (FEDs). However, carbon nanotubes obtained by those methods have been found lacking in their performance including mechanical strength and electric conductivity since, in those methods, carbon nanotubes are simply dispersed in a solvent to be applied or mixed with a binder before being applied. It is therefore difficult to use the resultant carbon nanotubes as they are for an electrode or an electric circuit.

JP 2002-503204 A describes that it is possible to form carbon nanotubes having a three-dimensional structure from functionalized carbon nanotubes. Disclosed in the document are: carbon nanotubes where functional groups are bonded for separation adsorption of porous passing materials and which are deposited on a metal mesh to obtain porousness suitable for being used simply as a flow cell electrode in chromatography; and carbon nanotubes bonded to one another by using as a cross-linking agent such as alkoxide of aluminum or of silica (the alkoxide itself serves as an insulator). However, alkoxide is cross-linked with itself, with the result that several tens of remaining alkoxide groups form a chain randomly in cross-linked sites in the obtained carbon nanotube structure. This causes the gap between carbon nanotubes and chemical structure to vary from one cross-linked site to another, making it difficult to obtain the intended characteristics and limiting the range of application of the carbon nanotube structure.

### Summary of the Invention

The present invention has been made to solve the problems described above, and provides a method and material for manufacturing a homogeneous, mesh-like carbon nanotube structure whose application range is widened by reducing fluctuation in gap between carbon nanotubes, with accuracy.

According to the present invention, a carbon nanotube structure is characterized by including: plural carbon nanotubes; and cross-linked sites formed from plural chemical bonds between functional groups, each of the functional groups bonded to different carbon nanotubes of the plural carbon nanotubes at least on one end, in which the plural carbon nanotubes constitute a mesh structure.

This carbon nanotube structure has a mesh structure composed of carbon nanotubes that are bonded to one another through cross-linked sites that are formed by chemical bonding of functional groups each of which is connected to another functional group and to one of the carbon nanotubes. Accordingly, the cross-linked sites where the carbon nanotubes are connected to one another can have a fixed size if appropriate functional groups are chosen to be bonded. Carbon nanotubes have a very stable chemical structure, and thus it is not often that a functional group other than the one intended for modification is bonded to a carbon nanotube. Therefore, cross-linked sites structured as designed can be obtained through chemical bonding between the functional groups, and the carbon nanotube structure can be made homogeneous.

Furthermore, the chemical bonding between the functional groups allows the length of the cross-linked sites between carbon nanotubes shorter than when a cross-linking agent is used to cross-link the functional groups to one another. As a result, a denser carbon nanotube structure is obtained and effects unique to carbon nanotubes are exerted more prominently.

In addition, the carbon nanotube structure in which plural carbon nanotubes form a mesh structure through plural cross-linked sites can make good use of the excellent characteristics of carbon nanotubes stably, unlike such materials as a carbon nanotube dispersion film and a resin dispersion film where carbon nanotubes are contingently brought into contact with one another but actually are isolated from one another.

Preferably, each of the chemical bonds between plural functional groups is at least one chemical bond formed when producing a group selected from the group consisting of -COOCO-, -O-, -NHCO-, -COO-, and -NCH- in the case of the condensation reaction, or at least one chemical bond formed when producing a group selected from the group consisting of -NH-, -S-, and -O- in the case of a substitution reaction, or -NHCOO- in the case of an addition reaction, or -S-S in the case of oxidative reaction. The respective groups, formed when reacting the functional groups, are sometime called "chemical bond" hereinafter.

Examples of the functional groups to be bonded to carbon nanotubes before reaction include -OH, -COOH, -COOR (R is -CₙH₂ₙ₋₁. -CₙH₂ₙ or -CₙH₂ₙ₊₁, comprising these substituted functional groups. "n" is an integer in the range of 1 to 10. R is preferably -methyl or -ethyl.), -X, -COX (X is a halogen atom), -SH, -CHO, -OSO₂CH₃, -OSO₂(C₆H₄)CH₃-NH₂, and -NCO. Preferably, at least one of the functional groups is selected from the group consisting of the above.

Particularly desirable as the functional groups is -COOH since it is relatively easy to introduce a carboxyl group into a carbon nanotube. In addition, the resultant substance (carbon nanotube carboxylic acid) has high reactivity. When a dehydration condensation agent such as N-ethyl-N'-(3-dimethylaminopropyl) carbodiimide is used, -COOH readily starts a condensation reaction, which makes this functional group suitable for forming a film by application.

Further, a method of manufacturing a carbon nanotube structure according to the present invention is characterized by including: supplying a base body with a liquid solution containing carbon nanotubes that have functional groups (a supplying step); and cross-linking the plural carbon nanotubes to one another by causing the functional groups to form chemical bonds among themselves to thereby form a mesh structure of the carbon nanotube structure (a cross-linking step).

Conventionally, a structure in which carbon nanotubes are gathered and brought into contact with one another so as to obtain effects of interaction among the carbon nanotubes cannot be patterned, unless sealed with resin or the like, since the gathered carbon nanotubes are scattered upon patterning. In addition, even if the structure is sealed with resin, application of resin causes the carbon nanotubes to float around before patterning is started and to lose contact with one another as the resin flow breaks the connection between the carbon nanotubes. The carbon nanotubes are thus isolated from one another in a sea of resin, making it impossible for the structure to utilize the excellent characteristics of carbon nanotubes.

An alternative method is to apply a dispersion liquid in which carbon nanotubes are dispersed in advance in a resin liquid solution. However, this method also presents a problem even before patterning is started since the carbon nanotube concentration in the liquid has to be considerably high in order to achieve a stable connection between carbon nanotubes that are brought into contact with one another.
Forming a mesh-like carbon nanotube structure using a cross-linking agent that is cross-linked with itself as disclosed in JP 2002-503204 A is another insufficient method because cross-linked sites are greatly varied in length, which makes it difficult to obtain a homogeneous carbon nanotube structure.

According to the present invention, in the first step of supplying a base body with a liquid solution that contains carbon nanotubes having functional groups (hereinafter also referred to as cross-linking application liquid), the liquid solution is poured onto the entire surface of or a part of a surface of the base body, or poured into the base body if the base body is a mold having a desired shape. In the subsequent cross-linking step, the applied liquid solution is cured to form a carbon nanotube structure in which the carbon nanotubes are cross-linked to one another building a mesh structure. Through these two steps, the carbon nanotube structure is structurally stabilized on the base body.

The liquid solution may be applied to a substrate. In this case, a mesh-like carbon nanotube structure in the form of a layer can be obtained and the obtained carbon nanotube structure is easy to pattern into a desired shape as described later.
Desirably, the liquid solution contains an additive that prompts chemical bonding between the functional groups. The additive is indispensable particularly when a condensation reaction or a substitution reaction is to be utilized. When utilizing an oxidative reaction, an oxidative reaction accelerator is desirably added. No reaction accelerator or the like is particularly needed in the case of utilizing an addition reaction.

The carbon nanotube structure manufacturing method of the present invention preferably includes a patterning step in which the carbon nanotube structure layer is patterned into a desired shape. The carbon nanotube structure layer has already been stabilized structurally in the above cross-linking step and, patterned in this state, the carbon nanotube structure layer can be shaped into a desired pattern without the fear of letting carbon nanotubes scatter during the patterning step. In addition, with the carbon nanotube structure layer itself structurized, connection between carbon nanotubes is ensured and the characteristics of carbon nanotubes are fully utilized in the resultant carbon nanotube structure.

Furthermore, the cross-linked sites are homogeneous in the resultant carbon nanotube structure layer, thus presenting uniform characteristics throughout the layer. When the carbon nanotube structure layer is patterned and broken into minute pieces in the patterning step, this uniformity makes it possible to greatly reduce fluctuation in characteristics between the pieces of the patterned carbon nanotube layer.

Different types of functional groups may be employed as long as the employed functional groups form chemical bonds among themselves and bridge gaps between carbon nanotubes. In this case also, gaps between carbon nanotubes can be controlled and therefore a similarly homogeneous structure is obtained. After the reaction is completed, the carbon nanotubes constituting the skeleton of the mesh structure are set at a controlled distance from one another. For that reason, the mesh structure can be increased in density by using a cross-linking agent to cross-link functional groups that do not react among themselves, or to cross-link some of bonds formed from the functional groups that have finished reacting. The cross-linking agent to be used after the skeleton of the mesh structure is formed is either a self-polymerization cross-linking agent, which is cross-linked with itself, or a cross-linking agent that does not allow self-polymerization.

The patterning step has two modes: Mode A and Mode B.
In Mode A, dry etching is performed on other regions of the carbon nanotube structure layer on the base body surface than the region to be patterned into a desired shape, thus removing the carbon nanotube structure layer from those regions and patterning the carbon nanotube structure layer into a pattern of the desired shape.

The patterning step of Mode A may be divided into two steps: a resist layer forming step and a removal step. In the resist layer forming step, a resist layer (preferably a resin layer) is formed on the region of the carbon nanotube structure layer on the base body surface that is to be patterned into a desired shape. In the removal step, the exposed portions of the carbon nanotube structure layer that are not covered with the resist layer are removed by dry etching (preferably through irradiation of oxygen molecule radicals, which are generated by irradiating oxygen molecules with an ultraviolet ray). The removal step may be followed by a resist layer peeling step in which the resist layer formed in the resist layer forming step is peeled off, thereby exposing the patterned carbon nanotube structure layer.

Alternatively, the patterning step of Mode A may employ selective irradiation of ion beams. In the selective ion beam irradiation, regions of the carbon nanotube structure layer on the base body surface other than the region to be patterned into a desired shape are irradiatedwith ionbeamsof gasmolecule ions, thus removing the carbon nanotube structure layer from the irradiated regions and patterning the carbon nanotube structure layer into a desired shape.

The patterning step (Mode B) includes: a resist layer forming step for forming a resist layer on a region of the carbon nanotube structure layer on the base body surface that is to be patterned into the desired shape; and a removal step for bringing an etchant into contact with a side of the base body where the carbon nanotube structure layer and the resist layer are layered, thereby removing the carbon nanotube structure layer from the exposed regions that are not covered with the resist layer.

In the carbon nanotube structure manufacturing method of the present invention, preferably, each of the functional groups is at least one functional group selected from the group consisting of -COOR (R is -CₙH₂ₙ₋₁, -CₙH₂ₙ or -CₙH₂ₙ₊₁, comprising these substituted functional groups. "n" is an integer in the range of 1 to 10. R is preferably -methyl or -ethyl.), -COOH, -COX (X is a halogen atom), -OH, -CHO, and -NH₂ in the case of a condensation reaction, or at least one functional group selected from the group consisting of -NH₂, -X (X is a halogen atom), -SH, -OH, -OSO₂CH₃, and-OSO₂ (C₆H₄) CH₃ in the case of a substitution reaction, or -OH and/or -NCO in the case of an addition reaction, or -SH in the case of an oxidative reaction.
Particularly in the carbon nanotube structure manufacturing method of the present invention, molecules that contain the functional groups listed in the above may be bonded to carbon nanotubes to form cross-linking sites from chemical bonds between the functional groups contained.

Of the functional groups for a condensation reaction, -COOH is especially desirable since it is relatively easy to introduce a carboxyl group into a carbon nanotube. In addition, the resultant substance (carbon nanotube carboxylic acid) has high reactivity. When -COOH is selected as functional groups for forming the mesh structure, the functional groups can be introduced to plural portions of one carbon nanotube with ease. Furthermore, the functional group -COOH readily starts a condensation reaction, which makes this functional group suitable for forming a film by application.

As has been mentioned in the description of the carbon nanotube structure, the base body may be one that has plasticity or flexibility in the carbon nanotube structure manufacturing method of the present invention. When the base body has plasticity or flexibility, the shape of the base body can be changed in accordance with the use of the obtained carbon nanotube structure.

Examples of a useful application example of the method of manufacturing a carbon nanotube structure according to the present invention includes: applying a liquid solution containing carbon nanotubes that have functional groups to a surface of a temporary substrate (an application step); cross-linking the plural carbon nanotubes to one another by causing the functional groups to form chemical bonds among themselves to thereby form a mesh structure of a carbon nanotube structure layer (a cross-linking step); patterning the carbon nanotube structure layer into a desired shape (a patterning step) ; and transferring the patterned carbon nanotube structure layer to a base body (a transfer step).

In this application example, the base body in the carbon nanotube structure manufacturing method that has been described in the above is replaced by a temporary substrate. The carbon nanotube structure layer is patterned on a surface of the temporary substrate and then transferred to a desired base body, which is the final stop for the patterned carbon nanotube structure layer.

The term base body is used in this specification to represent an obj ect where a patterned carbon nanotube structure layer is formed. Accordingly, an object where a patterned nanotube structure layer is temporarily formed is referred to as 'temporary substrate' as in the above application example.

The above transfer step may be modified and, instead of transferring the patterned carbon nanotube structure layer from the temporary substrate directly to the base body, the patterned nanotube structure layer may be transferred from the temporary substrate onto a surface of an intermediate transfer body, from which the patterned carbon nanotube structure layer is further transferred to the base body.

The carbon nanotube structure manufacturing method of the application example is particularly effective when a rigid substrate is used as the temporary substrate and a plastic or flexible substrate is used as the base body. Alternatively, in the transfer step, the patterned carbon nanotube structure layer may be transferred to a plastic or flexible transfer body serving as an intermediate transfer body and then onto a base body that has a desired surface shape or that can change its shape (by its plasticity or elasticity, or by being bent).

The above application example of the present invention is effective when the cross-linking step includes a step of heating the carbon nanotube structure layer that is formed on the temporary substrate surface at a temperature lower than the melting point of the temporary substrate and equal to or higher than the melting point of the base body (or an intermediate transfer body, if one is used), or equal to or higher than the glass transition temperature of the base body (or the intermediate transfer body), in order to cure the applied liquid solution. This means that, according to the application example of the present invention, the carbon nanotube structurecan be manufactured appropriately even when a base body where a carbon nanotube structure layer is to be formed is made from a material that has low melting point or glass transition temperature as long as the temporary substrate has high melting point because then it is possible to heat the carbon nanotube structure layer in the cross-linking step at a temperature lower than the melting point of the temporary substrate and equal to or higher than the melting point or glass transition temperature of the base body.

In the above application example, as the patterning step, a step can be adopted in which dry etching is performed on other regions of the carbon nanotube structure layer on the base body surface than a region to be patterned into the desired shape, thus removing the carbonnanotube structure layer from those regions andpatterning the carbon nanotube structure layer into the desired shape.

This makes the above application example of the present invention particularly effective for the case where the base body (or an intermediate transfer body, if one is used) does not have resistance to radicals or ions of gas molecules radiated in the patterning step whereas the temporary substrate is resistant to the radicals or ions. This means that, according to the application example of the present invention, the carbon nanotube structure can be manufactured appropriately even when a base body where a carbon nanotube structure layer is to be formed is made from a material that has no resistance to dry etching performed in the patterning step as long as the temporary substrate is formed from a material that is resistant to the dry etching because then it is possible to carry out the dry etching operation without a problem.

Further, in the above application example of the present invention, the patterning step may include: a resist layer forming step for forming a resist layer on a region of the carbon nanotube structure layer on the temporary substrate surface that is to be patterned into the desired shape; and a removal step for bringing an etchant into contact with a side of the temporary substrate where the carbon nanotube structure layer and the resist layer are layered, thereby removing the carbon nanotube structure layer from the exposed regions that are not covered with the resist layer.

This makes the above application example of the present invention particularly effective for the case where the base body (or an intermediate transfer body, if one is used) does not have resistance to the etchant used in the patterning step whereas the temporary substrate is resistant to the etchant. This means that, according to the application example of the present invention, the carbon nanotube structure can be manufactured appropriately even when a base body where a carbon nanotube structure layer is to be formed is made from a material that has no resistance to the etchant used in the patterning step as long as the temporary substrate is formed from a material that is resistant to the etchant because then it is possible to use the etchant without a problem.

Further, a carbon nanotube transfer body according to the present invention to be used in the above application example of the present invention is characterized by including: a temporary substrate; and a carbon nanotube structure layer carried on a surface of the temporary substrate, the carbon nanotube structure layer constituting a mesh structure by cross-linking plural carbon nanotubes to one another through cross-linked sites formed from chemical bonds between plural functional groups that are bonded, at least on one end, to different carbon nanotubes out of the plural carbon nanotubes, the carbon nanotube structure layer having a desired shape to be transferred to a base body, in which the temporary substrate is removed from the base body as the carbon nanotube structure layer is transferred to the base body.

To utilize the carbon nanotube transfer body of the present invention in manufacture of a carbon nanotube structure, a carbon nanotube structure layer with a mesh structure which has been formed on a temporary substrate surface and patterned to suit a desired device, is transferred onto a base body that constitutes a part of the device and then the temporary substrate is removed. By utilizing the carbon nanotube transfer body, a carbon nanotube structure can readily be manufactured without a cross-linking reaction on the base body surface. If this is not the case, utilizing the carbon nanotube transfer body is still advantageous because carbon nanotubes are carried on a temporary substrate while being cross-linked, which makes the carbon nanotubes very easy to handle.
Examples of methods of removing the temporary substrate include mechanical peeling, chemical decomposition, burn-off, melting, sublimation, and dissolution.

In an application example of the present invention, it is preferable for a step of patterning a carbon nanotube structure layer into a desired shape to include pre-patterning on a temporary substrate by the etching or other method described above in the case where fine patterning is required. Alternatively, a carbon nanotube structure layer may be cut into a desired shape along with a temporary substrate, which is removed after the carbon nanotube structure layer is attached to a base body. Whichever method is employed, carbon nanotubes that are cross-linked to one another constitute a mesh structure ensuring mutual connection, which is well maintained through transfer of the mesh structure to a surface of a base body because carbon nanotubes' tough but pliable nature lowers the risk of breaking the connection irrespective of the surface shape of the base body.

When manufacturing the carbon nanotube transfer body, a carbon nanotube structure layer is formed either by a cross-linking reaction on a temporary substrate or by a cross-linking reaction on a different substrate and a subsequent transfer to an intermediate transfer body, which can be seen as a temporary substrate thus making the transferred carbon nanotube structure layer and the intermediate transfer body as a whole into the carbon nanotube transfer body.
The transfer body of the present invention makes it possible to transfer a pattern of a carbon nanotube structure to a base body that has a complicated surface shape as long as a temporary substrate is a substrate that has plasticity or flexibility.

A liquid solution for manufacturing a carbon nanotube structure is characterized by containing plural carbon nanotubes each of which has a functional group and an additive for bonding the functional group of one of the carbon nanotubes to the functional group of another of the carbon nanotubes.
Using the liquid solution makes it possible to manufacture a homogeneous, mesh-like carbon nanotube structure without having any difficulty at all in terms of handling.
The additive is a condensing agent when a condensation reaction is to be utilized, and has to include a base if a substitution reaction is to be used. In the case of using an oxidative reaction, the additive is desirably an oxidative reaction accelerator. No reaction accelerator or the like is particularly needed in the case of utilizing an addition reaction. The additive may be mixed in the liquid solution in advance or immediately before use.

According to the present invention, a carbon nanotube structure having homogeneous characteristics is obtained making it possible to stably manufacture a device or the like that uses carbon nanotubes. When the obtained carbon nanotube structure is broken into minute pieces by patterning, cutting or the like, fluctuation in characteristic between patterns or between regions is small and therefore a homogeneous device can be manufactured.

### Brief Description of the Drawings

Fig. 1(a) is a schematic sectional view of a base body surface to illustrate an example of a carbon nanotube structuremanufacturing method of the present invention which shows the state of the base body before being subjected to a patterning step;

Fig. 1(b) is a schematic sectional view of a base body surface to illustrate an example of a carbon nanotube structure manufacturing method of the present invention in which a resist layer is formed on the entire surface of the base body where a carbon nanotube structure layer has been formed;

Fig. 1(c) is a schematic sectional view of a base body surface to illustrate an example of a carbon nanotube structuremanufacturing method of the present invention which shows the surface state of the base body after a resist layer forming step;

Fig. 1(d) is a schematic sectional view of a base body surface to illustrate an example of a carbon nanotube structure manufacturing method of the present invention which shows the surface state of the base body after a removal step;

Fig. 1 (e) is a schematic sectional view of a base body surface to illustrate an example of a carbon nanotube structuremanufacturing method of the present invention which shows the surface state of the base body after a resist layer peeling step;

Fig. 2 is a reaction scheme for synthesis of carbon nanotube carboxylic acid in (Addition Step) in Example 1; and

Fig. 3 is a reaction scheme for cross-linking by a dehydration condensation reaction in (Curing Step) in Example 1.

### Detailed Description of the Preferred Embodiment

Detailed descriptions will be given below on a method of manufacturing a carbon nanotube structure of the present invention.

### [Carbon Nanotube Structure]

In the present invention, a carbon nanotube structure is characterized in that plural carbon nanotubes constitute a mesh structure by being cross-linked to one another through cross-linked sites formed from chemical bonds between plural functional groups that are bonded, at least on one end, to different carbon nanotubes out of the plural carbon nanotubes.
When the carbon nanotube structure is in the form of a layer, other layers than the carbon nanotube structure layer may be formed on a surface of a base body. Other electric wires and electronic parts or the like may also be added.

### <Base Body>

In the present invention, the term base body means an object where a carbon nanotube structure is formed. A base body is a member supplied with a liquid solution in which carbon nanotubes modified with functional groups are mixed with a necessary additive in order to form a carbon nanotube structure. A base body may be like a mold which is separated from the carbon nanotube structure after formation of the carbon nanotube structure is completed, or may serve as a substrate constituting a part of a device that uses the carbon nanotube structure. In the present invention, a base body is not limited to a flat shape but can have any surface shape including spherical, curved, convexed or concaved, and amorphous.

When forming a carbon nanotube structure into a layer, the shape of a base body determines a course to take. If the shape of a base body allows, a carbon nanotube structure layer can be patterned directly on a surface of the base body. If not, a base body and a patterned carbon nanotube structure layer carried on the base body are together pasted onto a second base body, or the patterned carbon nanotube structure layer alone is transferred to the second base body. (Those are examples and there are other courses though not described here.)

There is no particular limitation on material of a base body. In addition to various materials conventionally used in substrates of electronic devices (such as a silicon wafer or a zinc oxide substrate), a diversity of resin materials and inorganic materials can be used for a base body without a problem. In general, a substrate having an insulating surface maybe selected as a base body. However, a base body that is not insulative (a conductive or semi-conductive base body) may be employed depending on the function of a carbon nanotube structure layer to be formed.

In particular, a carbon nanotube structure can be manufactured with ease even when a base body is a plastic or flexible substrate as will be described later. In addition, even if this substrate is bent and deformed, the risk of breaking a carbon nanotube structure layer that is formed on a surface of the substrate is small because of the cross-linking structure of the carbon nanotube structure layer. Thus, degradation of the performance of a device that uses the carbon nanotube structure due to the deformation is prevented. Also, chemical bonding between functional groups in the carbon nanotube structure makes characteristics of the carbon nanotube structure homogeneous. Examples of plastic or flexible substrates include substrates formed from various resins such as polyethylene, polypropylene, polyvinyl chloride, polyamide, and polyimide.

### <Carbon Nanotube Structure Layer>

In the present invention, the term carbon nanotube structure layer means a layer in which plural carbon nanotubes constitute a mesh structure by being chemically bonded to one another through cross-linked sites formed from chemical bonds between plural functional groups that are bonded, at least on one end, to different carbon nanotubes out of the plural carbon nanotubes. Any method can be employed to form a carbon nanotube structure layer as long as the method is capable of forming a layer of carbon nanotubes that constitute a mesh structure by being cross-linked to one another through chemical bonding between functional groups. However, a carbon nanotube structure manufacturing method of the present invention which is described later is preferable since the manufacture is easy with the method. This manufacturing method is also capable of providing at low cost a high performance carbon nanotube structure whose characteristics are easy to control and uniformize.

The carbon nanotube structure layer manufactured by the carbon nanotube structure manufacturing method of the present invention, which is described later, to be used as a carbon nanotube structure of the present invention is formed by curing a liquid solution (cross-linking application liquid) that contains carbon nanotubes having functional groups and, if necessary, an additive for forming chemical bonds between the functional groups. As the liquid solution is cured, the functional groups of the carbon nanotubes react with one another to form cross-linking sites.
The carbon nanotube structure layer in the carbon nanotube structure is described below with reference to an example in which the carbon nanotube structure manufacturing method of the present invention is employed.

### (Carbon Nanotube)

Carbon nanotubes, which are the main component in the present invention, may be single-wall carbon nanotubes or multi-wall carbon nanotubes having two or more layers. Whether one or both types of carbon nanotubes are used (and, if only one type is to be used, which type is selected) is decided appropriately taking into consideration the use of the obtained carbon nanotube structure and cost.

Carbon nanotubes in the present invention include ones that are not exactly shaped like a tube, such as a carbon nanohorn (a horn-shaped carbon nanotube whose diameter is continuously increased from one end toward the other end) which is a variant of a single-wall carbon nanotube, a carbon nanocoil (a coil-shaped carbon nanotube forming a spiral when viewed in entirety), a carbon nanobead (a spherical bead made of amorphous carbon or the like with its center pierced by a tube), a cup-stacked nanotube, and a carbon nanotube with its circumference covered with a carbon nanohorn or amorphous carbon.

Furthermore, carbon nanotubes in the present invention may be ones that contain some substance inside, such as ametal-containing nanotube which is a carbon nanotube containing metal or the like, and a peapod nanotube which is a carbon nanotube containing a fullerene or a metal-containing fullerene.

As described above, the present invention can employ carbon nanotubes of any mode, including common carbon nanotubes, variants of common carbon nanotubes, and carbon nanotubes with various modifications,withouta problemintermsofreactivity. Therefore, the concept of carbon nanotube in the present invention encompasses all of the above.

These carbon nanotubes are conventionally synthesized by a known method, such as arc discharge, laser ablation, and CVD, and the present invention can employ any of the methods. However, arc discharge in a magnetic field is preferable from the viewpoint of synthesizing a highly pure carbon nanotube.

Carbon nanotubes used in the present invention are preferably equal to and more than 0.3 nm and equal to or less than 100 nm in diameter. If the diameter of the carbon nanotubes exceeds this upper limit, the synthesis becomes difficult and costly. Amore desirable upper limit of the diameter of the carbon nanotubes is 30 nm or less.

In general, the lower limit of carbon nanotube diameter is about 0.3 nm from a structural standpoint. However, too thin a diameter could lower the synthesis yield. It is therefore desirable to set the lower limit of carbon nanotube diameter to 1 nm or more, more desirably 10 nm or more.

The length of carbon nanotubes used in the present invention is preferably equal to or more than 0.1 µm and equal to or less than 100 µm. If the length of the carbon nanotubes exceeds this upper limit, the synthesis becomes difficult or requires a special method raisingcost. On the other hand, if the length of the carbon nanotubes falls short of this lower limit, the number of cross-link bonding points per carbon nanotube is reduced, which is undesirable. Amore desirable upper limit of carbon nanotube length is 10 µm or less and a more desirable lower limit of carbon nanotube length is 1 µm or more.

The appropriate carbon nanotube content in the cross-linking application liquid is varied depending on the length and thickness of carbon nanotubes, whether single-wall carbon nanotubes or multi-wall carbon nanotubes are used, the type and amount of functional groups in the carbon nanotubes, the type and amount of a condensing agent, whether there is a solvent or other additive used and, if one is used, the type and amount of the solvent or additive, etc. The carbon nanotube concentration in the liquid solution shouldbe high enough to form an excellent filmby application and curing but not too high to make it difficult to apply the liquid.

Specifically, the ratio of carbon nanotubes to the entire application liquid excluding the mass of the functional groups is 0.01 to 10 g/l, desirably 0.1 to 5 g/l, and more desirably 0.5 to 1.5 g/l, although, as mentioned above, the ranges could be different if the parameters are different.

I f the purity of carbon nanotubes to be used is not high enough, it is desirable to raise the purity by refining the carbon nanotubes prior to preparation of the cross-linking application liquid. In the present invention, the higher the carbon nanotube purity, the better the result can be. Specifically, the purity is desirably 90% or higher, more desirably, 95% or higher. When the purity is low, bonds are formed among carboxylic acid or other functional groups bonded to carbon products such as amorphous carbon and tar, which are impurities. This could change the cross-linking distance between carbon nanotubes, leading to a failure in obtaining desired characteristics. No particular limitation is put on how carbon nanotubes are refined, and any known refining method can be employed.

### (Functional Group)

In the present invention, carbon nanotubes can have any functional group as long as functional groups chosen can be added to the carbon nanotubes chemically and can react among themselves with the help of some additive. Specific examples of such functional groups include -COOR, -COX, -MgX, -X (X represents halogen), -OR, -NR¹R², -NCO, -NCS, -COOH, -OH, -NH₂, -SH, -SO₃H -R'CHOH, -CHO, -CN, -COSH, -SR, -SIR'₃ (R, R¹, R², and R' each represent -CₙH₂ₙ₋₁, -CₙH₂ₙ or -CₙH₂ₙ₊₁, comprising these substituted functional groups. "n" is an integer in the range of 1 to 10. R, R¹, R², and R' each represent preferably -methyl or -ethyl.). Note that employable functional groups are not limited to those examples.

Preferably, each of the chemical bonds between the plural functional groups is at least one chemical bond selected from the group consisting of -COOR (R is a substituted or unsubstituted hydrocarbon group), -COOH, -COX (X is a halogen atom), -OH, -CHO, and -NH₂ in the case of a condensation reaction, or at least one chemical bond selected from the group consisting of -NH₂, -X (X is a halogen atom), and -SH, -OH, -OSO₂CH₃ and -OSO₂ (C₆H₄CH₃) in the case of a substitution reaction, or -OH and/or -NCO in the case of an addition reaction, or -SH in the case of an oxidative reaction.

Alternatively, molecules containing as a part of their components the preferable functional groups listed above may be bonded to carbon nanotubes to form chemical bonds between those functional groups. In this case also, the length of cross-linked sites can be controlled since the large molecular weight functional groups bonded to carbon nanotubes form bonds as intended.

The appropriate amount of functional groups introduced varies depending on the length and thickness of carbon nanotubes, whether single-wall carbon nanotubes or multi-wall carbon nanotubes are used, the type of functional groups, the use of the carbon nanotube structure obtained, etc. From the viewpoint of the strength of the bridge obtained, namely, the strength of the film formed by application, a preferable amount of functional groups introduced is large enough to add two or more functional groups to each carbon nanotube. How functional groups are introduced into carbon nanotubes will be explained in a section below titled "Method of Manufacturing a Carbon Nanotube Structure".

### (Additive)

Any additive that is capable of making the functional groups of the carbon nanotubes react to one another can be mixed in the cross-linking application liquid. In other words, the types of additives that can be chosen are limited to a certain degree by the types of the functional groups and the reaction type. Also, the condition of curing (heating, UV irradiation, irradiation of visible light, natural curing, etc.) as a result of the reaction is naturally determined by the combination of those parameters.

### (Condensing Agent)

To give specific examples of preferable additives, an acid catalyst or a dehydration condensation agent, for example, sulfuric acid, N-ethyl-N'-(3-dimethyl aminopropyl) carbodiimide, and dicyclohexyl carbodiimide, is preferred as a condensing agent. Desirably, at least one condensing agent may be selected from the group consisting of the above. The functional groups chosen have to react to one another with the help of the selected condensing agent.

### (Base)

When a substitution reaction is to be utilized, a base is an indispensable component of the cross-linking application liquid. An arbitrary base may be selected based on the degree of acidity of hydroxyl groups.
Preferably, the base may be at least one selected from the groupconsistingof sodiumhydroxide, potassiumhydroxide, pyridine, and sodium ethoxide. A substitution reaction is to take place among the functional groups with the help of the selected base.

It is particularly desirable to select a combination of functional groups such that at least two functional groups from each of the example groups that are given above as examples of preferable functional groups react to each other. Listed in Table 1 are functional groups of carbon nanotubes and names of the corresponding reactions.
An addition reaction does not necessarily need an additive. In an oxidative reaction, an additive is not necessarily needed but adding an oxidative reaction accelerator is preferable. A specific example of the accelerator is iodine.

**Table 1**

| Binding site | Functional groups of the carbon nanotubes (A) | Functional groups of the carbon nanotubes (B) | Reaction |
|---|---|---|---|
| -COOCO- | -COOH | - | Dehydration condensation reaction |
| -S-S- | -SH | - | Oxidative reaction |
| -O- | -OH | - | Dehydration condensation reaction |
| -NH-CO- | -COOH | -NH₂ | Dehydration condensation reaction |
| -COO- | -COOH | -OH | Dehydration condensation reaction |
| -COO- | -COOR | -OH | Dehydration condensation reaction |
| -COO- | -COX | -OH | Dehydration condensation reaction |
| -CH=N- | -CHO | -NH₂ | Dehydration condensation reaction |
| -NH- | -NH₂ | -X | Substitution reaction |
| -S- | -SH | -X | Substitution reaction |
| -O- | -OH | -X | Substitution reaction |
| -O- | -OH | -OSO₂CH₃ | Substitution reaction |
| -O- | -OH | -OSO₂(C₆H₄)CH₃ | Substitution reaction |
| -NH-COO- | -OH | -N=C=O | Addition reaction |

| | | | |
|---|---|---|---|
| * R is a substituted or unsubstituted hydrocarbon group. X is a halogen. | | | |

The appropriate additive content in the cross-linking application liquid is varied depending on the type of the additive, the length and thickness of carbon nanotubes, whether single-wall carbon nanotubes or multi-wall carbon nanotubes are used, the type and amount of functional groups in the carbon nanotubes, whether there is a solvent or other additive used and, if one is used, the type and amount of the solvent or additive, etc.

### (Other Additive)

The cross-linking application liquid may contain various additives including a solvent, a viscosity adjuster, a dispersant, and a cross-linking accelerator. Any solvent can be appropriately employed without particular limitation as long as it is suitable for the additive used. Specific examples of employable solvents include: organic solvents such as methanol, ethanol, isopropanol, n-propanol, butanol, methyl ethyl ketone, toluene, benzene, acetone, chloroform, methylene chloride, acetonitrile, diethyl ether, tetrahydrofuran (THF), and dimethylformamide; water; aqueous solutions of acids; and alkaline aqueous solutions. A solvent as such is added in an amount that is not particularly limited but determined appropriately by taking into consideration the ease of applying the cross-linking application liquid.

A viscosity adjuster is added when the condensing agent alone is not enough to make the cross-linking application liquid easy to apply. Any viscosity adjuster can be appropriately employed without any limitation as long as it is suitable for the additive used. Specific examples of employable viscosity adjusters include methanol, ethanol, isopropanol, n-propanol, butanol, methyl ethyl ketone, toluene, benzene, acetone, chloroform, methylene chloride, acetonitrile, diethyl ether, and THF.

Some of those viscosity adjusters obtain the function of a solvent when added in a certain amount, and it is meaningless to apparently discriminate viscosity adjusters from solvents. A viscosity adjuster as such is added in an amount that is not particularly limited but determined by taking into consideration the ease of applying the cross-linking application liquid.

A dispersant is added to the cross-linking application liquid in order to maintain the dispersion stability of the carbon nanotubes or the additive in the application liquid. Various known surface-active agents, water-soluble organic solvents, water, aqueous solutions of acids, alkaline aqueous solutions, etc. can be employed as a dispersant. However, a dispersant is not always necessary since components of the coating material (cross-linking application liquid) of the present invention have high dispersion stability by themselves. In addition, depending on the use of the coat formed by applying the cross-linking application liquid, the presence of a dispersant and like other impurities in the coat may not be desirable. In such case, a dispersant is not added at all, or is added in a very small amount.

### (Method of Preparing the Cross-linking Application Liquid)

A method of preparing the cross-linking application liquid is described next.
The cross-linking application liquid is prepared by mixing carbon nanotubes that have functional groups with an additive that causes the functional groups to form chemical bonds among themselves (Mixing Step). The mixing step may be preceded by an addition step in which the functional groups are introduced into the carbon nanotubes.

If carbon nanotubes having functional groups are starting material, the preparation starts with the mixing step. If normal carbon nanotubes themselves are starting material, the preparation starts with the addition step.
The addition step is a step for introducing functional groups into carbon nanotubes. How functional groups are introduced is varied depending on the type of functional group. One method is to add a desired functional group directly, and another method is to introduce a functional group that is easy to attach and then substitute the whole functional groups or a part thereof or attach a different functional group to the former functional group in order to obtain the objective functional group.
Still another method is to apply a mechanochemical force to a carbon nanotube to break or alter only a small portion of a graphene sheet on the surface of the carbon nanotube and introduce various functional groups from the broken or altered portion.

Cup-stacked carbon nanotubes, which have many defects on the surface upon manufacture, and carbon nanotubes that are formed by vapor phase growth are relatively easy to introduce functional groups. On the other hand, carbon nanotubes that have a perfect graphene sheet structure exert the carbon nanotube characteristics more effectively and are easier to control the characteristics. Consequently, it is particularly desirable to use a multi-wall carbon nanotube so that defects formed as many as appropriate on its outermost layer are used to bond functional groups for cross-linking while the inner layers having less structural defects exert the carbon nanotube characteristics.

There is no particular limitation put on the addition step and any known method can be employed. Various addition methods disclosed in JP 2002-503204 Amaybe employed in the present invention depending on the purpose.
A description is given on a method of introducing -COOH, a particularly desirable functional group among the functional groups listed in the above.

To introduce carboxyl groups into carbon nanotubes, carboxyl groups are refluxed together with an acid having an oxidizing effect. This operation is relatively easy and is preferable since carboxyl groups which are rich in reactivity are attached to carbon nanotubes. A brief description of the operation is given below.

An acid having an oxidizing effect is, for example, concentrated nitric acid, hydrogen peroxide water, a mixture of sulfuric acid and nitric acid, or aqua regia. When concentrated nitric acid is used, in particular, the concentration is desirably 5% by mass or higher, more desirably, 60% by mass or higher.

A normal reflux method can be employed. The temperature is preferably set to a level near the boiling point of the acid used. When concentrated nitric acid is used, for instance, the temperature is preferably set to 120 to 130°C. The reflux desirably lasts 30 minutes to 20 hours, more desirably, 1 hour to 8 hours.

Carbon nanotubes to which carboxyl groups are attached (carbon nanotube carboxylic acid) are generated in the reaction liquid after the reflux. The reaction liquid is cooled down to room temperature and then receives a separation operation or washing as necessary, thereby obtaining the objective carbon nanotube carboxylic acid (carbon nanotubes having -COOH as functional groups).

A mixing step is a step of preparing the cross-linking application liquid by mixing carbon nanotubes that have functional groups (-COOH) with a condensing agent that causes dehydration condensation among the functional groups. In addition to carbon nanotubes that have functional groups and a condensing agent, the components described in the above section [Carbon Nanotube Structure] are also mixed in the mixing step. Preferably, the ease of application of the cross-linking application liquid is adjusted by controlling the amount of the solvent or viscosity adjuster added, and now the cross-linking application liquid is ready to be applied.

To mix all the ingredients together, the ingredients may be simply stirred with a spatula, a stirring machine having a stirring blade, a magnetic stirrer, or an agitation pump. A more powerful approach may be taken to disperse the carbon nanotubes by using an ultrasound dispersing machine or a homogenizer. In this case, the carbon nanotubes can be dispersed more evenly to enhance storage stability and build a mesh structure from the cross-linked carbon nanotubes all over the place. Note that, when using a homogenizer and like other stirring machine that has a strong shearing force, the machine is operated for a very short period of time in order to avoid cutting or damaging of the carbon nanotubes in the application liquid.

The cross-linking application liquid described above is supplied or applied to a surface of the base body and cured on the surface to form a carbon nanotube structure layer. Details of how the liquid is applied and cured will be described in the section below titled "Method of Manufacturing a Carbon Nanotube Structure" .

A carbon nanotube structure layer in the present invention is a network of carbon nanotubes that are connected to one another through cross-linked sites formed from chemical bonds between plural functional groups that are bonded, at least on one end, to different carbon nanotubes out of the plural carbon nanotubes. To elaborate, the carbon nanotube structure layer has a matrix shape obtained by condensation and, with the carbon nanotubes connected to one another through the cross-linked sites, can fully exert such carbon nanotube characteristics as high carrier (electrons and holes) transportation ability. In short, the carbon nanotube structure layer makes it possible to utilize the inherent characteristics of carbon nanotubes since the carbon nanotube structure layer is practically composed of carbon nanotubes alone with its carbon nanotubes closely knitted together via no other bonding agent or the like.

The carbon nanotube structure layer in the present invention has a wide range of thickness from very thin to rather thick to suit the use. If the carbon nanotube content in the cross-linking application liquid is reduced (a simple way to achieve this is to thin the liquid and lower the viscosity) and applied and spread thin, a very thin coat is obtained. On the other hand, a thick coat is obtained by increasing the carbon nanotube content. A thicker coat can be obtained by repeated application. The thinnest coat is about 10 nm whereas application can be repeated until a coat as thick as desired is obtained. The thickest film that can be formed in one coating is about 2 µm. It is also possible to give the carbon nanotube structure a desired shape by adjusting the carbon nanotube content in the cross-linking application liquid, pouring the application liquid into a mold, and letting the carbon nanotubes bond.

In the carbon nanotube structure layer, the sites where the carbon nanotubes are cross-linked to one another, namely, the cross-linked sites formed by a reaction among the functional groups of the carbon nanotubes, have a cross-linking structure in which bonds resulting from the reaction among the functional groups are linked.

The cross-linked sites are formed by a reaction among the functional groups, thus enhancing the actual carbon nanotube density of the carbon nanotube structure. If the functional groups are reduced in size, the carbon nanotubes can be brought very close to one another both electrically and physically, and this makes it easier to exploit characteristics of each carbon nanotube. Since the cross-linked sites where carbon nanotubes in the nanotube structure layer are cross-linked to one another are chemical bonds between functional groups, the carbon nanotube structure mainly has the same cross-linking structure. Here, thephrasemainlyhaving the same structure means that all cross-linked sites have an identical cross-linking structure, or not all but most of the cross-linked sites are chemical bonds between functional groups.

In such carbon nanotube structure layer where cross-linked sites bridging gaps between carbon nanotubes mainly have the same cross-linking structure, a uniform network of carbon nanotubes can be brought into a desired state. Therefore, electric and physical carbon nanotube characteristics that are homogeneous and excellent can be obtained. Furthermore, the exact characteristics expected from carbon nanotubes, or close to the expected level, can be obtained.

As has been described, a carbon nanotube structure in which a carbon nanotube structure layer has a mesh structure that is composed of plural carbon nanotubes connected to one another through plural cross-linked sites. Thus, contact or arrangement of carbon nanotubes is not disturbed, unlike a mere carbon nanotube dispersion film, thereby realizing a carbon tube structure having homogeneous characteristics. Furthermore, the carbon nanotube structure layer can be patterned fairly freely, giving the carbon nanotube structure various shapes and accordingly various uses.

A protective layer or other various functional layers may be put on the patterned carbon nanotube structure layer. When provided with a protective layer, the carbon nanotube structure layer, which is a network of cross-linked carbon nanotubes, can be kept more solidly to the base body surface and protected from external forces. A resist layer to be described in the section [Method of Manufacturing a Carbon Nanotube Structure] may be utilized as the protective layer if the resist layer is left instead of being removed. It is also effective to newly form a protective layer that covers the entire surface including regions of the carbon nanotube structure layer that are to be removed and not to form a pattern of desired shape. Various known resin materials and inorganic materials can be employed, without a problem, to form a protective film that suits the purpose.

The carbon nanotube structure layer and another such carbon nanotube structure layer may be layered with some functional layer interposed between the two layers. If the functional layer is an insulating layer and the carbon nanotube structure layers are shaped into an appropriate pattern and connected to each other at the interlayer, a highly integrated device can be manufactured. For the interlayer connection, a still another carbon structure layer may be provided, or a new carbon nanotube may be used for wiring, or a metal film or other measure may be taken for wiring.

As already mentioned, the base body may be a substrate that has plasticity or flexibility. With a plastic or flexible substrate serving as the base body, the entire carbon nanotube structure is improved in flexibility, and options of places to install the carbon nanotube structure (environments in which the carbon nanotube structure can be used) are increased greatly.

In addition, when constituting a device, a carbon nanotube structure that uses a plastic or flexible substrate can be adapted to various arrangements in the device and can take various shapes, which give the carbon nanotube structure high mountability.

Specifics of the above-described carbon nanotube structure including its shape and the like will be made clear in the following [Method of Manufacturing a Carbon Nanotube Structure] section and Example. Note that the descriptions below show merely examples and are not to limit specific modes of the carbon nanotube structure of the present invention.

### [Method of Manufacturing a Carbon Nanotube Structure]

Acarbonnanotubemanufacturingmethodof the present invention is a method suitable for manufacture of the above-described carbon nanotube structure. Specifically, the carbon nanotube manufacturing method of the present invention includes (A) a supplying step of supplying a surface of a base body with a liquid solution (cross-linking application liquid) that contains carbon nanotubes having functional groups and, if necessary, an additive that causes the functional groups to bond among themselves and (B) a cross-linking step of forming a carbon nanotube structure layer that has amesh structure composed of the plural carbon nanotubes that are cross-linked to one another by bonds formed among the functional groups.
The carbon nanotube manufacturing method of the present invention may include additional steps such as (C) a patterning step of patterning the carbon nanotube structure layer into a desired shape.

### (A) Supplying Step

In the present invention, a supplying step is a step of supplying the base body surface with a liquid solution (cross-linking application liquid) that contains carbon nanotubes having functional groups and, if necessary, an additive that causes the functional groups to bond among themselves. The cross-linking application liquid has to be supplied in the supplying step to all regions where the carbon nanotube structure layer is to be formed (desired regions) but, as long as those desired regions are included, there is no need to supply the entire base body surface with the application liquid.

Any method can be applied to supply the cross-linking application liquid and the liquid may be poured or dropped onto the base body surface. When a carbon nanotube structure in the form of a layer is to be obtained, the cross-linking application liquid may be applied and spread with a squeegee or may be applied by a common application method. Examples of common application methods include spin coating, wire bar coating, cast coating, roll coating, brush coating, dip coating, spray coating, and curtain coating.
For descriptions of the base body, the carbon nanotubes having functional groups, the additive, and the cross-linking application liquid, see the section [Carbon Nanotube Structure].

### (B) Cross-linking Step

In the present invention, a cross-linking step is a step of forming a carbon nanotube structure layer that has a mesh structure constituted of the plural carbon nanotubes cross-linked with one another through curing of the applied cross-linking application liquid by causing the functional groups, which are at least partially bonded to the carbon nanotubes, to form bonds among themselves. The cross-linking application liquid has to be cured in the cross-linking step to form the carbon nanotube structure layer in all the desired regions but, as long as the desired regions are included, there is no need to cure all of the cross-linking application liquid supplied to the base body surface.

What operation should be carried out in the cross-linking step is naturally determined by the combination of the functional groups to be bonded. An example thereof is shown in Table 1. If a combination of thermally curable functional groups is employed, the applied liquid is heated by a heater or the like. If a combination of functional groups that are cured by ultraviolet rays is employed, the applied liquid is irradiated with a UV lamp or left under the sun. Ifacombination ofself-curablefunctionalgroupsisemployed, it is sufficient to let the applied liquid stand still. Leaving the applied liquid to stand still is deemed as one of the operations that may be carried out in the cross-linking step of the present invention.

In the case of a condensation reaction between carbon nanotubes to which -COOH functional groups are attached, the applied liquid is cured by heating (polyesterification by a dehydration condensation reaction). As the dehydration condensation reaction progresses multilaterally, the carbon nanotubes are cross-linked until a network of carbon nanotubes connected to one another constitutes a carbon nanotube structure layer.

To give an example of conditions preferable for the above combination, the heating temperature is set to 50 to 500°C, more desirably 150 to 200°C, and the heating period is set to 1 minute to 10 hours, more desirably 1 hour to 2 hours.

### (C) Patterning Step

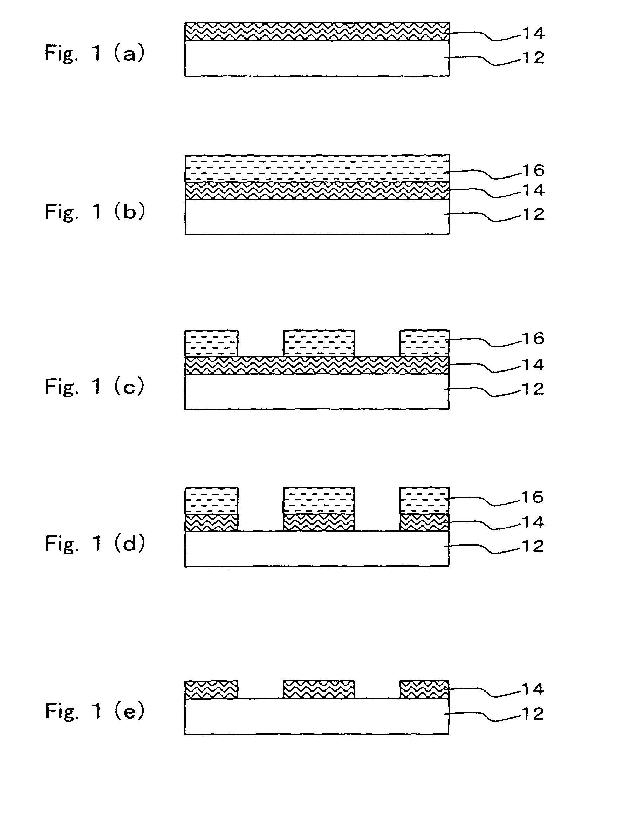

In the present invention, a patterning step is a step of patterning the carbon nanotube structure layer into a desired shape. Fig. 1(e) is a schematic sectional view showing the surface state of the base body after (C) Patterning Step.
Although no particular limitations are put on patterning operations, there are two preferred modes of (C-A) and (C-B) to the patterning step.

### (C-A)

In Mode (C-A), dry etching is performed on other regions of the carbon nanotube structure layer on the base body surface than the region to be patterned into a desired shape, thus removing the carbon nanotube structure layer from those regions and patterning the carbon nanotube structure layer into a pattern of the desired shape.

Patterning the carbon nanotube structure layer into a desired shape by dry etching means that other regions of the carbon nanotube structure layer on the base body surface than the region to form the desired shape receive irradiation of radicals or the like. Methods of irradiation of radicals or the like include one in which the other regions of the carbon nanotube structure layer than the region to form the pattern is directly irradiated with radicals or the like (C-A-1), and one in which the other regions than the region to form the pattern are covered with a resist layer and then the entire base body surface (on the side where the carbon nanotube structure layer and the resist layer are formed) is irradiated with radicals or the like (C-A-2).

### (C-A-1)

Direct irradiation of the other regions of the carbon nanotube structure layer than the region to form the pattern with radicals or the like specifically means that regions of the carbon nanotube structure layer on the base body surface other than the region to be patterned into a desired shape are irradiated with ion beams of gas molecule ions, thereby removing the carbon nanotube structure layer from the irradiated regions and patterning the carbon nanotube structure layer into the desired shape.

In the form of an ion beam, ions of gas molecules can be radiated selectively with precision on the order of several nm. This method is preferable in that the carbon nanotube structure layer can be patterned into a desired shape in one operation.

Examples of gas species that can be selected for the ion beam method include oxygen, argon, nitrogen, carbon dioxide, and hexafluoride. Oxygen is particularly desirable in the present invention.
In the ion beam method, a voltage is applied to gas molecules in vacuum to accelerate and ionize the gas molecules and the obtained ions are radiated in the form of a beam. The ion beam method is capable of etching various substances with varying irradiation accuracy by changing the type of gas used.

### (C-A-2)

To employ Mode (C-A-2) in which the other regions than the region to form the pattern are covered with a resist layer before the entire base body surface is irradiated with radicals or the like, the patterning step includes:
Aresist layer forming step (C-A-2-1) of forminga resist layer on the region of the carbon nanotube structure layer on the base body surface that is to be patterned into a desired shape; and
A removal step (C-A-2-2) of performing dry etching on the side of the base body where the carbon nanotube structure layer and the resist layer are layered, thereby removing the carbon nanotube structure layer from the exposed regions of that are not covered with the resist layer.
The removal step in Mode (C-A-2) may be followed by a resist layer peeling step (C-A-2-3) in which the resist layer formed in the resist layer forming step is peeled off.

### (C-A-2-1) Resist Layer Forming Step

In the resist layer forming step, a resist layer is formed on the region of the carbon nanotube structure layer on the base body surface that is to be patterned into a desired shape. This step follows a process generally called a photolithography process and, instead of directly forming a resist layer on the region of the carbon nanotube structure layer that is to be patterned into a desired shape, a resist layer 16 is once formed on the entire surface of a base body 12 on the side where a carbon nanotube structure layer 14 is formed as shown in Fig. 1(b). Then the region to form the pattern of desired shape is exposed to light and portions that are not exposed to light are removed through subsequent development. Ultimately, the resist layer is present only on the region of the carbon nanotube structure layer that is to form a desired pattern.

Fig. 1(c) is a schematic sectional view showing the surface state of the base body after the resist layer forming step (C-A-2-1) . Depending on the type of resist, a portion that is exposed to light is removed by development whereas a portion that is not exposed to light remains.
A known method can be employed to form the resist layer. Specifically, the resist layer is formed by applying a resist agent to the substrate with a spin coater or the like and then heating the applied agent.

There is no particular limitation on the material (resist agent) used to form the resist layer 16, and various known resist materials can be employed without anymodification. Employing resin (forming a resin layer as the resist layer 16) is particularly desirable. The carbon nanotube structure layer 14 has a mesh-like network of carbon nanotubes and is a porous structure. Accordingly, if the resist layer 16 is formed from a metal evaporation film or like other material that forms a film on the very surface and does not infiltrate deep into the holes of the mesh, carbon nanotubes cannot be sealed satisfactorily against radiation of plasma or the like (insufficient sealing means exposure to plasma or the like). As a result, plasma or the like enters from the holes and corrodes the carbon nanotube layer 14 under the resist layer 16, reducing the contour of the carbon nanotube structure layer 14 and leaving only a small portion of the carbon nanotube structure layer 14. Although it is possible to give the resist layer 16 a larger contour (area) than the pattern of desired shape taking into account this reduction in size, this method requires a wide gap between patterns and therefore makes it impossible to form patterns close together.

In contrast, when resin is used to form the resist layer 16, the resin enters the spaces inside the holes and reduces the number of carbon nanotubes that are exposed to plasma or the like. As a result, high density patterning of the carbon nanotube structure layer 14 is made possible.

Examples of the resin material that mainly constitutes the resin layer include, novolac resin, polymethyl methacrylate, and a mixture of the two, but not limited thereto.

The resist material for forming the resist layer is a mixture of one of the above resin materials, or a precursor thereof, and a photosensitive material or the like. The present invention can employ any known resist material. For instance, OFPR 800, a product of TOKYO OHKA KOGYO CO., LTD. and NPR 9710, a product of NAGASE & CO., LTD. can be employed.

Appropriate operations or conditions to expose the resist layer 16 to light (heating if the resist material used is thermally curable, a different exposure method may be selected for a different type of resist material) and to develop are selected in accordance with the resist material used. (Examples of exposure and development operations or conditions include the light source wavelength, the intensity of exposure light, the exposure time, the exposure amount, environmental conditions during exposure, the development method, the type and concentration of developer, the development time, and what pre-treatment or post-treatment is to be employed.) When a commercially available resist material is used, expose and develop following the instruction manual for the product. In general, a UV-curable resist material may be selected for conveniences of handling and exposed to ultraviolet rays drawing the pattern of desired shape. Thereafter, the film is developed using an alkaline developer, which is then washed off with water, and is let dry to complete the photolithography process.

### (C-A-2-2) Removal Step

In a removal step, dry etching is performed on the side of the base body where the carbon nanotube structure layer and the resist layer are layered, thereby removing the carbon nanotube structure layer from the exposed regions of that are not covered with the resist layer. (For the exposed regions, see Fig. 1 (c). The carbon nanotube structure layer 14 is exposed in regions where the resist layer 16 is removed). Fig. 1(d) is a schematic sectional view showing the surface state of the base after the removal step (C-A-2-2).

The removal step employs every method that is generally called dry etching, including the reactive ion method. The above-described ion beam method in (C-A-1) is one of dry etching methods.
See the section (C-A-1) for employable gas species, devices, operation environments, and the like.

In the present invention, oxygen is particularly desirable out of examples of gas species generally usable in dry etching which include oxygen, argon, and fluorine-based gas (e.g., chlorofluoro carbon, SF₆, and CF₄). With oxygen radicals, carbon nanotubes in the regions of the carbon nanotube structure layer 14 that are to be removed are oxidized (burnt) and turned into carbon dioxide. Accordingly, the residue has little adverse effect, and accurate patterning is achieved.

When oxygen is selected as gas species, oxygen radicals are generated by irradiating oxygen molecules with ultraviolet rays. A device that generates oxygen radicals by this method is commercially available by the name of UV washer, and is easy to obtain.

### (C-A-2-3) Resist Layer Peeling Step

The carbon nanotube structure manufacturing method of the present invention may end with the completion of the removal step (C-A-2-2), presenting a mode of the carbon nanotube structure of the present invention (the mode shown in Fig. 1(d)). If the resist layer 16 is to be removed from the carbon nanotube structure of this mode, the removal step has to be followed by a resist layer peeling step in which the resist layer 16 formed in the resist layer peeling step is peeled off. Fig. 1(e) is a schematic sectional view showing the surface state of the base body after the resist layer peeling step (C-A-2-3).

An appropriate resist layer peeling step operation may be selected in accordance with the material used to form the resist layer 16. When a commercially available resist material is used, the resist layer 16 is peeled off following the instruction manual for the product. When the resist layer 16 is a resin layer, a common removal method is to bring the resin layer into contact with an organic solvent that is capable of dissolving the resin layer.

### (C-B)

Mode (C-B) Patterning Step includes:
A resist layer forming step of forming a resist layer on the region of the carbon nanotube structure layer on the base body surface that is to be patterned into a desired shape; and
A removal step of bringing an etchant into contact with the side of the base body where the carbon nanotube structure layer and the resist layer are layered, thereby removing the carbon nanotube structure layer from the exposed regions of that are not covered with the resist layer.
This patterning step mode is a method commonly called wet etching (a method of removing an arbitrary portion using chemical = etchant).

The resist layer forming step in Mode (C-B) is identical with the resist layer forming step (C-A-2-1) described above except that a resist material resistant to etchant should be used in Mode (C-B) . Similar to the patterning step in Mode (C-A), the removal step in the patterning step of Mode (C-B) may be followed by the resist layer peeling step and details of this peeling step are as described in the resist layer peeling step (C-A-2-3). Detailed descriptions of those steps are therefore omitted here.

Reference is made to Fig. 1(c). In the removal step in Mode (C-B), an etchant is brought into contact with the side of the base body 12 where the carbon nanotube structure layer 14 and the resist layer 16 are layered, thereby removing the carbon nanotube structure layer 14 from the exposed regions of that are not covered with the resist layer 16.
In the present invention, etchant can be brought into contact with the carbon nanotube structure layer by any method that can bring a liquid into contact with a subject, such as dipping, spraying, and letting a liquid flow over a subject.

Etchant is in general an acid or alkali. Which etchant to be chosen is determined by the resist material constituting the resist layer 16, the structure of cross-linking among carbon nanotubes in the carbon nanotube structure layer 14, and other factors. A desirable etchant is one that etches the resist layer 16 as little as possible and that can easily remove the carbon nanotube structure layer 14.

However, the etchant that etches the resist layer 16 may be employed if it is possible to, by appropriately controlling the temperature and concentration of the etchant and how long the etchant is in contact with the carbon nanotube structure layer, remove the exposed regions of the carbon nanotube structure layer 14 before the resist layer 16 is completely etched away.

### (D) Other Steps

The carbon nanotube structure can be manufactured through the above steps. However, the carbon nanotube structure manufacturing method of the present invention may include additional steps.

For instance, it is preferable to put a surface treatment step for pre-treatment of the base body surface before the application step. The purpose of the surface treatment step is, for example, to enhance the absorption of the cross-linking application liquid to be applied, to enhance the adhesion between the base body surface and the carbon nanotube structure layer to be formed thereon, to clean the base body surface, or to adjust the electric conductivity of the base body surface.

An example of surface treatment for enhancing the absorption of the cross-linking application liquid is treatment by a silane coupling agent (e.g., aminopropyltriethoxysilane or γ-(2-aminoethyl) aminopropyltrimethoxysilane). Surface treatment by aminopropyltriethoxysilane is particularly widely employed and is preferable for the surface treatment step in the present invention. As documented by Y. L. Lyubchenko et al. in "Nucleic Acids Research vol. 21 (1993)" on pages 1117 to 1123, for example, surface treatment by aminopropyltriethoxysilane has conventionally been employed to treat the surface of a mica substrate for use in observation of AFM of DNA.

In the case where two or more carbon nanotube structure layers are to be layered, the operation of the carbon nanotube structure manufacturing method of the present invention is repeated twice or more. If an intermediate layer such as a dielectric layer or an insulating layer is to be interposed between carbon nanotube structure layers, a step of forming an intermediate layer is inserted in between repeating the operation of the carbon nanotube structure manufacturing method of the present invention.

If aprotective layer, an electrode layer, and other such layers are to be formed on the carbon nanotube structure layer, the manufacture method has to include steps for forming these layers. Appropriate materials and methods are chosen from known materials and methods, or materials and methods developed specially for the present invention are used, to form those layers.

### <Application Example of the Carbon Nanotube Structure Manufacturing Method of the Present Invention>

In an effective application example of the carbon nanotube structure manufacturing method of the present invention, the carbon nanotube structure layer is patterned on a surface of a temporary substrate and then transferred to a desired base body. It is also possible to modify this transfer step such that the patterned carbon nanotube structure layer is transferred from the temporary substrate to a surface of an intermediate transfer body and then to a desired base body (second base body).

The temporary substrate material that can be used, and is preferred, in this application example is the same as the base body material described in the section [Carbon Nanotube Structure]. However, a temporary substrate that has at least one flat surface, more desirably, one that is shaped like a flat plate is preferable for transfer of the carbon nanotube structure layer in the transfer step.

To be employable in this application example, a base body or an intermediate transfer body has to have an adhesive surface holding, or capable of holding, an adhesive. Common tape such as Scotch tape, paper tape, cloth tape, or imide tape can be used in the application example. In addition to the tape and other materials that have plasticity or flexibility, rigid materials may also be employed as a base body or an intermediate transfer body. In the case of a material that does not come with an adhesive, an adhesive is applied to a surface of the material that can hold an adhesive, and then the material can be used in a similar fashion to normal adhesive tape.
According to this application example, the carbon nanotube structure body can be manufactured with ease.

It is also possible to manufacture a carbon nanotube structure by preparing a carbon nanotube structure layer that is carried on a surface of a base body and attaching the carbon nanotube structure layer along with the base body to a surface of a desired second body (for example, a housing) that constitutes a device.

A carbon nanotube structure can be manufactured while skipping a cross-linking step if a carbon nanotube transfer body, which is a temporary substrate (or intermediate transfer body) carrying on its surface a carbon nanotube transfer layer, is used, the carbon nanotube structure layer alone is transferred to a surface of a base body that constitutes the carbon nanotube structure, and then the temporary substrate (or intermediate transfer body) is removed. Since the process is structured as such, the intermediate transfer body serves as a temporary substrate of the carbon nanotube transfer body in some cases. Those cases are included in the present invention because there is no need for the carbon nanotube transfer body to discriminate an intermediate transfer body from a temporary substrate.

When the carbon nanotube transfer body is employed, the carbon nanotube structure layer with carbon nanotubes cross-linked to one another is carried on the surface of the temporary substrate, and this makes the carbon nanotube structure layer very easy to handle in the subsequent steps. As a result, manufacture of a carbon nanotube structure is greatly facilitated. To remove the temporary substrate, an appropriate method may be selected from mechanical peeling, chemical decomposition, burn-off, melting, sublimation, dissolution, and the like.
The carbon nanotube structure manufacturing method of this application example is effective particularly when a base body of a device has a material and/or shape that make it difficult to apply the carbon nanotube structure manufacturing method of the present invention without some changes.

For instance, the application example of the present invention is effective when the temperature at which the applied liquid is cured in Cross-linking Step is equal to or higher than the melting point or glass transition temperature of the material that is to be used as a base body of the carbon nanotube structure. In this case, the heating temperature is set lower than the melting point of the temporary substrate to ensure a heating temperature necessary for the curing, and thus the carbon nanotube structure can be manufactured appropriately.

To give another example, the application example of the present invention is effective also when Patterning Step takes a mode in which dry etching is performed on other regions of the carbon nanotube structure layer on the temporary substrate surface than the region to be patterned into a desired shape, thus removing the carbon nanotube structure layer from those regions andpatterning the carbon nanotube structure layer into a pattern of the desired shape while the material that is to be used as a base body of the carbon nanotube structure is not resistant to dry etching of Patterning Step. In this case, a material resistant to dry etching is used as the temporary substrate so that the carbon nanotube structure can withstand Patterning Step on the temporary substrate, and thus the carbon nanotube structure of the present invention can be manufactured appropriately.

Although specifics on resistance and material are varied depending on dry etching conditions including gas species, intensity, time, temperature, and pressure, resin materials have relatively low resistance to dry etching. When a resin material is used as the base body, limitations brought by low resistance of the resin material are lifted by employing this application example. Therefore, forming the base body from a resin material is preferable in that merits of this application example are brought out. On the other hand, inorganic materials which have relatively high resistance to dry etching are suitable for the temporary substrate. In general, plastic or flexible materials have low resistance to dry etching and therefore using one of such materials as the base body is preferable in that merits of this application example are brought out.

To give another example, the application example of the present invention is effective also when the patterning step includes: a resist layer forming step of forming a resist layer on the region of the carbon nanotube structure layer on the temporary substrate surface that is to be patterned into a desired shape; and a removal step of bringing an etchant into contact with the side of the temporary substrate where the carbon nanotube structure layer and the resist layer are layered, thereby removing the carbon nanotube structure layer from the exposed regions of that are not covered with the resist layer while the base body has no resistance to the etchant used in the patterning step whereas the temporary substrate is resistant to the etchant. In this case, the base body in this application example serves as a base body of the carbon nanotube structure and a material resistant to the etchant is used as the temporary substrate so that the carbon nanotube structure can withstand the patterning step on the temporary substrate. Thus the carbon nanotube structure can be manufactured appropriately.

Specifics on resistance and material are varied depending on etching conditions including the type, concentration and temperature of the etchant used, how long the etchant is in contact with the carbon nanotube structure layer, and the like . When an acidic etchant is used and a base body of the carbon nanotube structure is to be formed from aluminum or like other materials that do not withstand acid, for example, limitations brought by low resistance of the base body material are lifted by employing this application example and using silicon or other materials that are resistant to acid as the temporary substrate. Limitations brought by low resistance are also lifted by using as the base body a material that has low resistance to an etchant as described above although depending on whether the etchant is acidic or alkaline.

The carbon nanotube structure is made easy to handle even more if a base body that carries a carbon nanotube structure layer is pasted onto a second base body. The obtained carbon nanotube structure can be used to build a device. The second base body may be physically rigid or may be plastic or flexible, and can take various shapes including a spherical shape and a concave-convex shape.

### <Example>

A more specific description of the present invention is given below through an example. However, the present invention is not limited to the following example.

### [Example 1 ... Multi-wall Carbon Nanotube Carboxylic Acid Anhydride Coating Material, Synthesis of a Coat]

### (Addition Step)

### Addition of Carboxyl Group ... Synthesis of Carbon Nanotube Carboxylic Acid

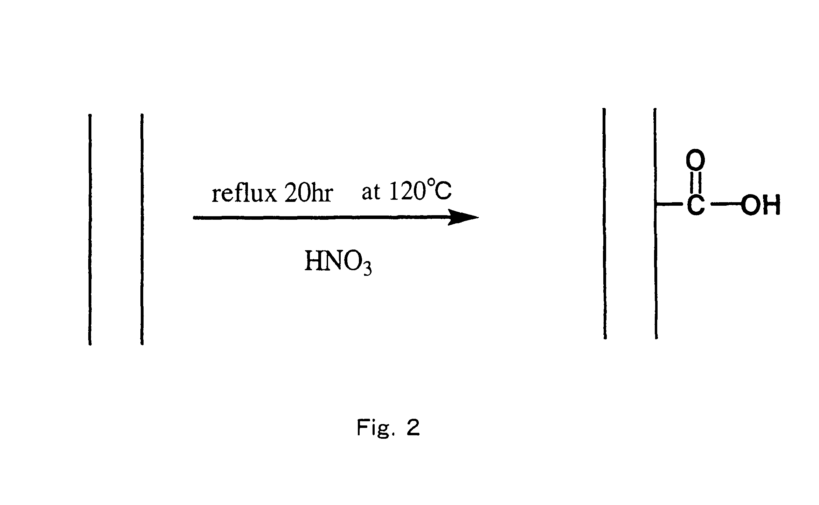

30 mg of multi-layer carbon nanotube powder (purity: 90%, average diameter: 30 nm, average length: 3µm, a product of Science Laboratory Inc.) was added to 20 ml of concentrated nitric acid (a 60% by mass aqueous solution, a product of KANTO KAGAKU) for reflux at 120°C for 20 hours to synthesize carbon nanotube carboxylic acid. A reaction scheme of the above is shown in Fig. 2. In Fig. 2, a carbon nanotube (CNT) is represented by two parallel lines.

The temperature of the liquid solution was returned to room temperature and centrifuged at 5, 000 rpm for 15 minutes to separate supernatant liquid fromprecipitate. The recovered precipitate was dispersed in 10 ml of pure water, and the dispersion liquid was subjected to centrifugal separation at 5,000 rpm for 15 minutes to separate supernatant liquid from precipitate. (The above process constitutes one washing operation.) This washing operation was repeated five more times and lastly precipitate was recovered.

### (Mixing Step)

10 mg of the carbon nanotube carboxylic acid esterified in the above step was added to 20 ml of dimethylformamide (a product of Wako Pure Chemical Industries, Inc.), and then 30 mg of N-ethyl-N'-(3-dimethylaminopropyl) carbodiimide (hydrochloride, a product of Aldrich Chemical Company, Inc.), which is a condensing agent for condensation between -COOH functional groups, was mixed in using an ultrasound dispersing machine.

### (Application Step)

About 0.1 ml of the thus obtained coating material was dropped and applied onto an SiO₂/Si substrate using a Pasteur pipette.

### (Curing Step)

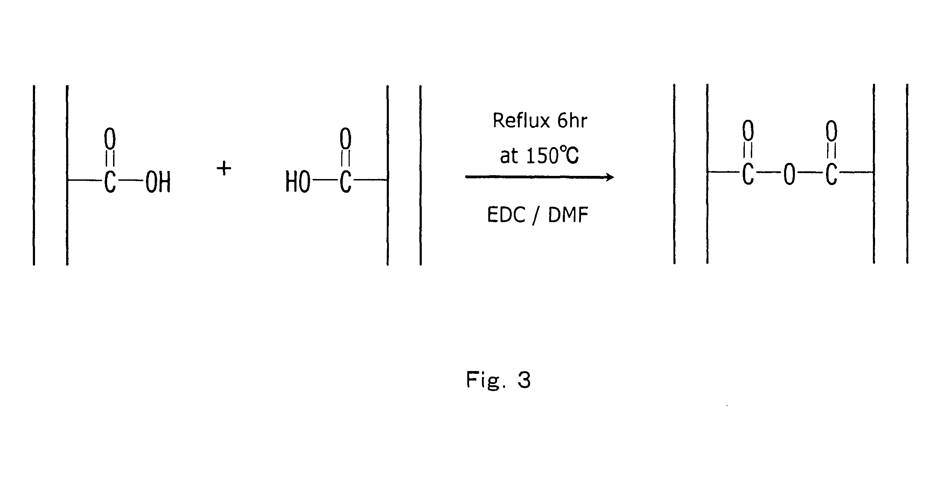

The substrate to which the coating material of this example had been applied as above was heated at 200°C for 10 minutes to start polymerization by a dehydration condensation reaction and obtain a coat. A reaction scheme of this is shown in Fig. 3.

### [Evaluation Test (Measurement of Direct Current Conductivity)]

A measurement was made on the direct current/voltage characteristics of the coat (MWNT-net (carboxylic acid anhydride)) of Example 1. Each coat has a thickness of 2 µm.
A gold electrode was formed by evaporation on the coat on the SiO₂/Si substrate to measure the characteristics by the two-terminal method using a Hewlett-Packard4140B picoammeter. The conductivity of the coat obtained from the measurement result was 1.03 S/cm. It has been confirmed from this test that a carbon nanotube structure that has cross-linked sites obtained by condensing functional groups forms a network structure.

A carbon nanotube structure can be used, for example, as a material of an electric element or electronic element, as a reinforcing member or a filling member if the advantage of high mechanical strength is to be taken, as an electromagnetic wave blocking member, and as an optical filter. Thus a carbon nanotube structure provides an industrially useful material with which various devices that utilize a diversity of carbon nanotube characteristics can have stable characteristics.

## Claims

1. A method of manufacturing a carbon nanotube structure, comprising the steps of:
supplying a base body with a liquid solution containing carbon nanotubes that have functional groups; and
cross-linking the plural carbon nanotubes to one another by causing the functional groups to form chemical bonds among themselves to thereby form a mesh structure of the carbon nanotube structure.

2. A method of manufacturing a carbon nanotube structure according to claim 1, wherein the liquid solution contains an additive that causes the functional groups to form chemical bonds among themselves.

3. A method of manufacturing a carbon nanotube structure according to claims 1 or 2
wherein the supplying step comprises an application step for applying the liquid solution to the base body, and
wherein the carbon nanotube structure is in a form of a layer.

4. A method of manufacturing a carbon nanotube structure according to claim 3, further comprising the step of patterning the carbon nanotube structure layer into a desired shape (a patterning step).

5. A method of manufacturing a carbon nanotube structure according to claim 4, wherein the patterning step is a step of performing dry etching on other regions of the carbon nanotube structure layer on the base body surface than a region to be patterned into the desired shape, thus removing the carbon nanotube structure layer from those regions and patterning the carbon nanotube structure layer into the desired shape.

6. A method of manufacturing a carbon nanotube structure according to claim 4, wherein the patterning step comprises:
a resist layer forming step of forming a. resist layer on the region of the carbon nanotube structure layer on the base body surface that is to be patterned into a desired shape; and
a removal step of removing the exposed portions of the carbon nanotube structure layer that are not covered with the resist layer by dry etching.

7. A method of manufacturing a carbon nanotube structure according to claim 6, wherein a side of the base body where the carbon nanotube structure layer and the resist layer are layered is irradiated with radicals of oxygen molecules in the removal step.

8. A method of manufacturing a carbon nanotube structure according to claims 6 or 7, wherein the side of the base body where the carbon nanotube structure layer and the resist layer are layered is irradiated with oxygen radicals that are generated by irradiating oxygen molecules with ultraviolet rays.

9. A method of manufacturing a carbon nanotube structure according to claim 6, wherein the removal step in the patterning step is followed by a resist layer peeling step for peeling off the resist layer that is formed in the resist layer forming step.

10. A method of manufacturing a carbon nanotube structure according to claim 6, wherein the resist layer is a resin layer.

11. A method of manufacturing a carbon nanotube structure according to claim 5, wherein the patterning step is a step of performing selective irradiation with ion beams of gas molecule ions on regions of the carbon nanotube structure layer on the base body surface other than the region to be patterned into a desired shape thus removing the carbon nanotube structure layer from the irradiated regions and patterning the carbon nanotube structure layer into the desired shape.

12. A method of manufacturing a carbon nanotube structure according to claim 2, wherein the reaction is a dehydration condensation reaction and the additive is a condensing agent.

13. A method of manufacturing a carbon nanotube structure according to claim 12, wherein each of the functional groups is at least one functional group selected from the group consisting of -COOR (R is a substituted or unsubstituted hydrocarbon group), -COOH, -COX (X is a halogen atom), -OH, -CHO, and -NH₂.

14. A method of manufacturing a carbon nanotube structure according to claim 13, wherein each of the functional groups is -COOH.

15. A method of manufacturing a carbon nanotube structure according to claim 12, wherein the condensing agent is at least one compound selected from the group consisting of sulfuric acid, N-ethyl-N'-(3-dimethylaminopropyl)carbodiimide, and dicyclohexyl carbodiimide.

16. A method of manufacturing a carbon nanotube structure according to claim 2, wherein the reaction is a substitution reaction and the additive is a base.

17. A method of manufacturing a carbon nanotube structure according to claim 16, wherein the base is at least one base selected from the group consisting of sodium hydroxide, potassium hydroxide, pyridine, and sodium ethoxide.

18. A method of manufacturing a .carbon nanotube structure according to claim 1, wherein the reaction is an addition reaction.

19. A method of manufacturing a carbon nanotube structure according to claim 18, wherein each of the functional groups is at least one functional group selected from the group consisting of -OH, and/or -UNCO.

20. A method of manufacturing a carbon nanotube structure according to claim 1, wherein the reaction is an oxidative reaction.

21. A method of manufacturing a carbon nanotube structure according to claim 20, wherein each of the functional groups is -SH.

22. A method of manufacturing a carbon nanotube structure according to claim 20, wherein the liquid solution contains an oxidative reaction accelerator.

23. A method of manufacturing a carbon nanotube structure according to claim 22, wherein the oxidative reaction accelerator is iodine.

24. A method of manufacturing a carbon nanotube structure according to claim 1, wherein each of the plural carbon nanotubes is a multi-wall carbon nanotube.

25. A method of manufacturing a carbon nanotube structure, comprising the steps of:
applying a liquid solution containing carbon nanotubes that have functional groups to a surface of a temporary substrate;
cross-linking the plural carbon nanotubes to one another by causing the functional groups to form chemical bonds among themselves to thereby form a mesh structure of a carbon nanotube structure layer;
patterning the carbon nanotube structure layer into a desired shape; and
transferring the patterned carbon nanotube structure layer to a base body.

26. A method of manufacturing a carbon nanotube structure according to claim 25, wherein a substrate having plasticity or flexibility is used as the base body.

27. A method of manufacturing a carbon nanotube structure according to claim 25, wherein the transfer step is followed by a pattern fixing step in which the patterned carbon nanotube structure layer that is transferred to the base body surface is fixed, along with the base body, to a second base body.

28. A method of manufacturing a carbon nanotube structure according to claim 25, wherein the transfer step is a step of transferring the patterned carbon nanotube structure layer on the temporary substrate surface to a surface of an intermediate transfer body and transferring the carbon nanotube structure layer that is transferred to the intermediate transfer body surface to the base body.

29. A method of manufacturing a carbon nanotube structure according to claim 25, wherein the cross-linking step includes a step of heating the carbon nanotube structure layer formed on the temporary substrate surface at a temperature lower than a melting point of the temporary substrate and equal to or higher than a melting point or glass transition temperature of the base body in order to cure the applied liquid solution.

30. A method of manufacturing a carbon nanotube structure according to claim 28, wherein the cross-linking step includes a step of heating the carbon nanotube structure layer formed on the temporary substrate surface at a temperature lower than a melting point of the temporary substrate and equal to or higher than a melting point or glass transition temperature of the intermediate transfer body in order to cure the applied liquid solution.

31. A method of manufacturing a carbon nanotube structure according to claim 25, wherein the patterning step is a step of performing dry etching on other regions of the carbon nanotube structure layer on the temporary substrate surface than a region to be patterned into a desired shape, thus removing the carbon nanotube structure layer from those regions and patterning the carbon nanotube structure into a pattern of the desired shape.

32. A method of manufacturing a carbon nanotube structure according to claim 31, wherein the base body has no resistance to the dry etching in the patterning step whereas the temporary substrate is resistant to the dry etching.

33. A method of manufacturing a carbon nanotube structure according to claim 28, wherein the patterning step is a step of performing dry etching on other regions of the carbon nanotube structure layer on the temporary substrate surface than a region to be patterned into a desired shape, thus removing the carbon nanotube structure layer from those regions and patterning the carbon nanotube structure layer into the desired shape, and
wherein the base body has no resistance to the dry etching in the patterning step whereas the temporary substrate is resistant to the dry etching.

34. A method of manufacturing a carbon nanotube structure according to claim 25, wherein the patterning step comprises:
a resist layer forming step of forming a resist layer on a region of the carbon nanotube structure layer on the temporary substrate surface that is to be patterned into a desired shape; and
a removal step for bringing an etchant into contact with a side of the temporary substrate where the carbon nanotube structure layer and the resist layer are layered, thereby removing the carbon nanotube structure layer from the exposed regions that are not covered with the resist layer.

35. A method of manufacturing a carbon nanotube structure according to claim 34, wherein the base body has no resistance to the etchant used in the patterning step whereas the temporary substrate is resistant to the etchant.

36. A method of manufacturing a carbon nanotube structure according to claim 25, wherein the patterning step comprises:
a resist layer forming step of forming a resist layer on a region of the carbon nanotube structure layer on the temporary substrate surface that is to be patterned into a desired shape; and
a removal step for bringing an etchant into contact with a side of the temporary substrate where the carbon nanotube structure layer and the resist layer are layered, thereby removing the carbon nanotube structure layer from the exposed regions of that are not covered with the resist layer,
wherein the base body has no resistance to the etchant used in the patterning step whereas the temporary substrate is resistant to the etchant.

37. A method of manufacturing a carbon nanotube structure according to claim 25, wherein the liquid solution contains an additive that causes the functional groups to form chemical bonds among themselves.

38. A method of manufacturing a carbon nanotube structure according to claim 37, wherein the reaction is a dehydration condensation reaction and the additive is a condensing agent.

39. A method of manufacturing a carbon nanotube structure according to claim 38, wherein each of the functional groups is at least one functional group selected from the group consisting of -COOR (R is a substituted or unsubstituted hydrocarbon group), -COOH, -COX (X is a halogen atom), -OH, -CHO, and -NH₂.

40. A method of manufacturing a carbon nanotube structure according to claim 39, wherein each of the functional groups is -COOH.

41. A method of manufacturing a carbon nanotube structure according to claim 38, wherein the condensing agent is selected from any one of sulfuric acid, N-ethyl-N'-(3-dimethylaminopropyl) carbodiimide, and dicyclohexyl carbodiimide.

42. A method of manufacturing a carbon nanotube structure according to claim 37, wherein the reaction is a substitution reaction and the additive is a base.

43. A method of manufacturing a carbon nanotube structure according to claim 42, wherein each of the functional groups is at least one functional group selected from the group consisting of-NH₂, -X (X is a halogen atom), -SH, -OH, -OSO₂CH₃, and -OSO₂(C₆H₄)CH₃.

44. A method of manufacturing a carbon nanotube structure according to claim 42, wherein the base is at least one type of base selected from the group consisting of sodium hydroxide, potassium hydroxide, pyridine, and sodium ethoxide.

45. A method of manufacturing a carbon nanotube structure according to claim 25, wherein the reaction is an addition reaction.

46. A method of manufacturing a carbon nanotube structure according two claim 45, wherein each of the functional groups is at least one functional group selected from the group consisting of -OH, and/or -NCO.

47. A method of manufacturing a carbon nanotube structure according to claim 25, wherein the reaction is an oxidative reaction.

48. A method of manufacturing a carbon nanotube structure according to claim 47, wherein each of the functional groups is -SH.

49. A method of manufacturing a carbon nanotube structure according to claim 47, wherein the liquid solution contains an oxidative reaction accelerator.

50. A method of manufacturing a carbon nanotube structure according to claim 49, wherein the oxidative reaction accelerator is iodine.

51. A carbon nanotube transfer body, comprising:
a temporary substrate; and
a carbon nanotube, structure layer carried on a surface of the temporary substrate, the carbon nanotube structure layer constituting a mesh structure by cross-linking plural carbon nanotubes to one another through cross-linked sites formed from plural chemical bonds between functional groups, each of the functional groups to different carbon nanotubes of the plural carbon nanotubes at least on one end, the carbon nanotube structure layer having a desired shape to be transferred to a base body,
wherein the temporary substrate is removed from the base body as the carbon nanotube structure layer is transferred to the base body.

52. A carbon nanotube transfer body according to claim 51, wherein each of the chemical bonds between the plural functional groups is at least one chemical bond selected from the group consisting of -COOCO-, -O-, -NHCO-, -COO-, and -NCH-.

53. A carbon nanotube transfer body according to claim 51, wherein each of the functional groups is at least one functional group selected from the group consisting of -NH-, -S-, and -O-,

54. A carbon nanotube transfer body according to claim 51, wherein each of the chemical bonds between the plural functional groups is -NHCOO-.

55. A carbon nanotube transfer body according to claim 51, wherein each of the chemical bonds between the plural functional groups is -S-S-.

56. A carbon nanotube transfer body according to claim 51, wherein the cross-linked sites of the carbon nanotube structure layer are formed from chemical bonds that are obtained by causing a reaction between the functional groups in a liquid solution that contains the carbon nanotubes having the functional groups.

57. A carbon nanotube transfer body according to claim 56, wherein the chemical bonds are formed by any one of a condensation reaction, a substitution reaction, an addition reaction, and an oxidative reaction.

58. A carbon nanotube transfer body according to claim 51, wherein a substrate having plasticity or flexibility is used as the temporary substrate.

## Patentansprüche

1. Verfahren zur Herstellung einer Kohlenstoff-Nanoröhren-Struktur, welches Verfahren die folgenden Schritte umfasst:
Versehen eines Grundkörpers mit einer flüssigen Lösung, die Kohlenstoff-Nanoröhren enthält, welche funktionelle Gruppen aufweisen; und
gegenseitiges Vernetzen der Mehrzahl der Kohlenstoff-Nanoröhren, indem die funktionellen Gruppen dazu veranlasst werden, chemische Bindungen untereinander zu bilden, um dadurch eine Maschenstruktur der Kohlenstoff-Nanoröhren-Struktur zu bilden.

2. Verfahren zur Herstellung einer Kohlenstoff-Nanoröhren-Struktur nach Anspruch 1, wobei die flüssige Lösung einen Zusatzstoff enthält, der die funktionellen Gruppen dazu veranlasst, chemische Bindungen untereinander zu bilden.

3. Verfahren zur Herstellung einer Kohlenstoff-Nanoröhren-Struktur nach Anspruch 1 oder 2,
wobei der Schritt des Versehens einen Auftragungsschritt zum Auftragen der flüssigen Lösung auf den Grundkörper umfasst, und
wobei die Kohlenstoff-Nanoröhren-Struktur in Form einer Schicht vorliegt.

4. Verfahren zur Herstellung einer Kohlenstoff-Nanoröhren-Struktur nach Anspruch 3, welches Verfahren darüber hinaus den Schritt einer Musterbildung der Schicht der Kohlenstoff-Nanoröhren-Struktur in eine gewünschte Gestalt umfasst (einen Musterbildungsschritt).

5. Verfahren zur Herstellung einer Kohlenstoff-Nanoröhren-Struktur nach Anspruch 4, wobei der Musterbildungsschritt ein Schritt der Durchführung einer Trockenätzung auf anderen Bereichen der Schicht der Kohlenstoff-Nanoröhren= Struktur auf der Oberfläche des Grundkörpers ist, welche Bereiche von jenem Bereich verschieden sind, der durch Musterbildung in die gewünschte Gestalt überführt werden soll, so dass die Schicht einer Kohlenstoff-Nanoröhren-Struktur aus jenen Bereichen entfernt wird, und die Musterbildung der Schicht der Kohlenstoff-Nanoröhren-Struktur in die gewünschte Gestalt erfolgt.

6. Verfahren zur Herstellung einer Kohlenstoff-Nanoröhren-Strüktur nach Anspruch 4, wobei der Musterbildungsschritt umfasst:
einen Abdecklackschicht-Bildungsschritt, bei dem eine Abdecklackschicht auf dem Bereich der Schicht der Kohlenstoff-Nanoröhren-Struktur auf der Oberfläche des Grundkörpers gebildet wird, der durch Musterbildung in eine gewünschte Gestalt überführt werden soll; und
einen Entfernungsschritt, bei dem die exponierten Abschnitte der Schicht der Kohlenstoff-Nanoröhren-Struktur durch Trockenätzung entfernt werden, welche Abschnitte nicht mit der Abdecklackschicht bedeckt sind.

7. Verfahren zur Herstellung einer Kohlenstoff-Nanoröhren-Struktur nach Anspruch 6, wobei eine Seite des Grundkörpers, auf welcher Seite die Schicht der Kohlenstoff-Nanoröhren-Struktur und die Abdecklackschicht aufeinander geschichtet sind, mit Radikalen von Sauerstoffmolekülen im Entfernungsschritt bestrahlt wird.

8. Verfahren zur Herstellung einer Kohlenstoff-Nanoröhren-Struktur nach Anspruch 6 oder 7, wobei die Seite des Grundkörpers, auf welcher Seite die Schicht der Kohlenstoff-Nanoröhren-Struktur und die Abdecklackschicht aufeinander geschichtet sind, mit Sauerstoffradikalen bestrahlt wird, die durch Bestrahlung von Sauerstoffmolekülen mit ultravioletter Strahlung erzeugt werden.

9. Verfahren zur Herstellung einer Kohlenstoff-Nanoröhren-Struktur nach Anspruch 6, wobei dem Entfernungsschritt in dem Musterbildungsschritt ein Abdecklackschicht-Ablöseschritt folgt, um die Abdecklackschicht abzulösen, die im Schritt zur Bildung der Abdecklackschicht gebildet wurde.

10. Verfahren zur Herstellung einer Kohlenstoff-Nanoröhren-Struktur nach Anspruch 6, wobei die Abdecklackschicht eine Harzschicht ist.

11. Verfahren zur Herstellung einer Kohlenstoff-Nanoröhren-Struktur nach Anspruch 5, wobei der Musterbildungsschritt einen Schritt der Durchführung einer selektiven Bestrahlung mit Ionenstrahlen aus Gasmolekül-Ionen auf jenen Bereichen der Schicht der Kohlenstoff-Nanoröhren-Struktur auf der Oberfläche des Grundkörpers ist, welche Bereiche von dem Bereich verschieden sind, der durch Musterbildung in eine gewünschte Gestalt überführt werden soll, so dass die Schicht der Kohlenstoff-Nänoröhren-Struktur von den bestrahlten Bereichen entfernt wird und eine Musterbildung der Schicht der Kohlenstoff-Nanoröhren-Struktur in die gewünschte Gestalt erfolgt.

12. Verfahren zur Herstellung einer Kohlenstoff-Nanoröhren-Struktür nach Anspruch 2, wobei die Reaktion eine Dehydratations-Kondensations-Reaktion ist, und der Zusatzstoff ein Kondensationsmittel ist.

13. Verfahren zur Herstellung einer Kohlenstoff-Nanoröhren-Struktur nach Anspruch 12, wobei jede der funktionellen Gruppen mindestens eine funktionelle Gruppe ist, die aus der Gruppe ausgewählt wird, welche aus -COOR (R ist eine substituierte oder unsubstituierte Kohlenwasserstoffgruppe), -COOH, -COX (X ist ein Halogenatom), -OH, -CHO und -NH₂ besteht.

14. Verfahren zur Herstellung einer Kohlenstoff-Nanoröhren-Struktur nach Anspruch 13, wobei jede der funktionellen Gruppen -COOH ist.

15. Verfahren zur Herstellung einer Kohlenstoff-Nanoröhren-Struktur nach Anspruch 12, wobei das Kondensationsmittel mindestens eine Verbindung ist, die aus der Gruppe ausgewählt wird, welche aus Schwefelsäure, N-Ethyl-N'-(3-dimethylaminopropyl)carbodiimid und Dicyclohexylcarbodiimid besteht.

16. Verfahren zur Herstellung einer Kohlenstoff-Nanoröhren-Struktur nach Anspruch 2, wobei die Reaktion eine Substitutionsreaktion ist und der Zusatzstoff eine Base ist.

17. Verfahren zur Herstellung einer Kohlenstoff-Nanoröhren-Struktur nach Anspruch 16, wobei die Base mindestens eine Base ist, die aus der Gruppe ausgewählt wird, welche aus Natriumhydroxid, Kaliumhydroxid, Pyridin und Natriumethoxid besteht.

18. Verfahren zur Herstellung einer Kohlenstoff-Nanoröhren-Struktur nach Anspruch 1, wobei die Reaktion eine Additionsreaktion ist.

19. Verfahren zur Herstellung einer Kohlenstoff-Nanoröhren-Struktur nach Anspruch 18, wobei jede der funktionellen Gruppen mindestens eine funktionelle Gruppe ist, die aus der Gruppe ausgewählt wird, welche aus -OH und/oder -NCO besteht.

20. Verfahren zur Herstellung einer Kohlenstoff-Nanoröhren-Struktur nach Anspruch 1, wobei die Reaktion eine Oxidationsreaktion ist.

21. Verfahren zur Herstellung einer Kohlenstoff-Nanoröhren-Struktur nach Anspruch 20, wobei jede der funktionellen Gruppen -SH ist.

22. Verfahren zur Herstellung einer Kohlenstoff-Nanoröhren-Struktur nach Anspruch 20, wobei die flüssige Lösung einen Beschleuniger für die Oxidationsreaktion enthält.

23. Verfahren zur Herstellung einer Kohlenstoff-Nanoröhren-Struktur nach Anspruch 22, wobei der Beschleuniger für die Oxidationsreaktion lod ist.

24. Verfahren zur Herstellung einer Kohlenstoff-Nanoröhren-Struktur nach Anspruch 1, wobei jede Kohlenstoff-Nanoröhre einer Mehrzahl von Kohlenstoff-Nanoröhren eine mehrwandige Kohlenstoff-Nanoröhre (multi-wall carbon nanotube) ist.

25. Verfahren zur Herstellung einer Kohlenstoff-Nanoröhren-Struktur, welches Verfahren die folgenden Schritte umfasst:
Auftragen einer flüssigen Lösung, die Kohlenstoff-Nanoröhren enthält, welche funktionelle Gruppen aufweisen, auf eine Oberfläche eines temporären Substrats; gegenseitiges Vernetzen der Mehrzahl der Kohlenstoff-Nanoröhreri, indem die funktionellen Gruppen dazu veranlasst werden, chemische Bindungen untereinander zu bilden, um somit eine Maschenstruktur einer Schicht der Kohlenstoff-Nanoröhren-Struktur zu bilden;
Musterbildung der Schicht der Kohlenstoff-Nanoröhren-Struktur in eine gewünschte Gestalt; und
Übertragen der gemusterten Schicht der Kohlenstoff-Nanoröhren-Struktur auf einen Grundkörper.

26. Verfahren zur Herstellung einer Kohlenstoff-Nanoröhren=Struktur nach Anspruch 25, wobei ein Substrat, das Plastizität oder Flexibilität besitzt, als Grundkörper verwendet wird.

27. Verfahren zur Herstellung einer Kohlenstoff-Nanoröhren-Struktur nach Anspruch 25, wobei dem Übertragungsschritt ein Schritt der Fixierung des Musters folgt, bei dem die gemusterte Schicht der Kohlenstoff-Nanoröhren-Struktur, welche auf die Oberfläche des Grundkörpers übertragen wird, zusammen mit dem Grundkörper auf einem zweiten Grundkörper fixiert wird.

28. Verfahren zur Herstellung einer Kohlenstoff-Nanoröhren-Struktur nach Anspruch 25, wobei der Übertragungsschritt ein Schritt der Übertragung der gemusterten Schicht der Kohlenstoff-Nanoröhren-Struktur auf der Oberfläche des temporären Substrats auf eine Oberfläche eines intermediären Übertragungskörpers und der Übertragung der Schicht der Kohlenstoff-Nanoröhren-Struktur, welche Schicht auf die Oberfläche des intermediären Übertragungskörpers übertragen wurde, auf den Grundkörper ist.

29. Verfahren zur Herstellung einer Kohlenstoff-Nanoröhren-Struktur nach Anspruch 25, wobei der Vernetzungsschritt einen Schritt des Erhitzens der Schicht der Kohlenstoff-Nanoröhren-Struktur, die auf der Oberfläche des temporären Substrats gebildet wurde, bei einer Temperatur umfasst, die niedriger ist als der Schmelzpunkt des temporären Substrats und gleich oder höher ist als ein Schmelzpunkt oder eine Glasübergangstemperatur des Grundkörpers, um die aufgetragene flüssige Lösung zu härten.

30. Verfahren zur Herstellung einer Kohlenstoff-Nanoröhren-Struktur nach Anspruch 28, wobei der Vernetzungsschritt einen Schritt des Erhitzens der Schicht der Kohlenstoff-Nanoröhren-Struktur, die auf der Oberfläche des temporären Substrats gebildet wurde, bei einer Temperatur umfasst, die niedriger ist als ein Schmelzpunkt des temporären Substrats und gleich oder höher ist als ein Schmelzpunkt oder eine Glasübergangstemperatur eines intermediären Übertragungskörpers, um die aufgetragene flüssige Lösung zu härten.

31. Verfahren zur Herstellung einer Kohlenstoff-Nanoröhren-Struktur nach Anspruch 25, wobei der Musterbildungsschritt ein Schritt der Durchführung einer Trockenätzung auf anderen Bereichen der Schicht der Kohlenstoff-Nanoröhren-Struktur auf der Oberfläche des temporären Substrats ist, welche Bereiche von einem Bereich verschieden sind, der durch Musterbildung in eine gewünschte Gestalt überführt werden soll, so dass die Schicht der Kohlenstoff-Nanoröhren-Struktur aus jenen Bereichen entfernt wird, und die Kohlenstoff-Nanoröhren-Struktur durch Musterbildung in ein Muster der gewünschten Gestalt überführt wird.

32. Verfahren zur Herstellung einer Kohlenstoff-Nanoröhren-Struktur nach Anspruch 31, wobei der Grundkörper keine Beständigkeit gegenüber der Trockenätzung in dem Musterbildungsschritt aufweist, während das temporäre Substrat gegenüber der Trockenätzung beständig ist.

33. Verfahren zur Herstellung einer Kohlenstoff-Nanoröhren-Struktur nach Anspruch 28, wobei, der Musterbildungsschritt ein Schritt der Durchführung der Trockenätzung auf anderen Bereichen der Schicht der Kohlenstoff-Nanoröhren-Struktur auf der Oberfläche des temporären Substrats ist, welche Bereiche von jenem Bereich verschieden sind, der durch Musterbildung in eine gewünschte Gestalt überführt werden soll, so dass die Schicht der Kohlenstoff-Nanoröhren-Struktur aus jenen Bereichen entfernt wird, und die Schicht der Kohlenstoff-Nanoröhren-Struktur durch Musterbildung in die gewünschte Gestalt überführt wird, und
wobei der Grundkörper keine Beständigkeit gegenüber der Trockenätzung in dem Musterbildungsschritt aufweist, während das temporäre Substrat gegenüber der Trockenätzung beständig ist.

34. Verfahren zur Herstellung einer Kohlenstoff-Nanoröhren-Struktur nach Anspruch 25, wobei der Musterbildungsschritt umfasst:
einen Abdecklackschicht-Bildungsschritt zur Bildung einer Abdecklackschicht auf einem Bereich einer Schicht der Kohlenstoff-Nanoröhren-Struktur auf der Oberfläche des temporären Substrats, welcher Bereich durch Musterbildung in eine gewünschte Gestalt überführt werden soll; und
einen Entfernungsschritt, um ein Ätzmittel in Kontakt mit einer Seite des temporären Substrats zu bringen, auf welcher Seite die Schicht der Kohlenstoff-Nanoröhren-Struktur und die Abdecklackschicht aufeinander geschichtet sind, um dadurch die Schicht der Kohlenstoff-Nanoröhren-Struktur von den exponierten Bereichen zu entfernen, die nicht mit der Abdecklackschicht bedeckt sind.

35. Verfahren zur Herstellung einer Kohlenstoff-Nanoröhren-Struktur nach Anspruch 34, wobei der Grundkörper keine Beständigkeit gegenüber dem Ätzmittel aufweist, welches im Musterbildungsschritt verwendet wird, während das temporäre Substrat gegenüber dem Ätzmittel beständig ist.

36. Verfahren zur Herstellung einer Kohlenstoff-Nanoröhren-Struktur nach Anspruch 25, wobei der Musterbildungsschritt umfasst:
einen Abdecklackschicht-Bildungsschritt zur Bildung einer Abdecklackschicht auf einem Bereich einer Schicht der Kohlenstoff-Nanoröhren-Struktur auf der Oberfläche des temporären Substrats, welcher Bereich durch Musterbildung in eine gewünschte Gestalt überführt werden soll; und
einen Entfernungsschritt, um ein Ätzmittel in Kontakt mit einer Seite des temporären Substrats zu bringen, auf welcher Seite die Schicht der Kohlenstoff-Nanoröhren-Struktur und die Abdecklackschicht aufeinander geschichtet sind, um dadurch die Schicht der Kohlenstoff-Nanoröhren-Struktur von den exponierten Bereichen zu entfernen, die nicht mit der Abdecklackschicht bedeckt sind,
wobei der Grundkörper keine Beständigkeit gegenüber dem Ätzmittel aufweist, welches in dem Musterbildungsschritt verwendet wird, während das temporäre Substrat gegenüber dem Ätzmittel beständig ist.

37. Verfahren zur Herstellung einer Kohlenstoff-Nanoröhren-Struktur nach Anspruch 25, wobei die flüssige Lösung einen Zusatzstoff enthält, der die funktionellen Gruppen dazu veranlasst, chemische Bindungen untereinander zu bilden.

38. Verfahren zur Herstellung einer Kohlenstoff-Nanoröhren-Struktur nach Anspruch 37, wobei die Reaktion eine Dehydi-atations-Kondensations-F2eaktion ist und der Zusatzstoff ein Kondensationsmittel ist.

39. Verfahren zur Herstellung einer Kohlenstoff-Nanoröhren-Struktur nach Anspruch 38, wobei jede der funktionellen Gruppen mindestens eine funktionelle Gruppe ist, die aus der Gruppe ausgewählt wird, welche aus -COOR (R ist eine substituierte oder unsubstituierte Kohlenwasserstöffgruppe), -COOH, -COX (X ist ein Halogenatom), -OH, -CHO und -NH₂ besteht.

40. Verfahren zur Herstellung einer Kohlenstoff-Nanoröhren-Struktur nach Anspruch 39, wobei jede der funktionellen Gruppen -COOH ist.

41. Verfahren zur Herstellung einer Kohlenstoff-Nanoröhren-Struktur nach Anspruch 38, wobei das Kondensationsmittel aus Schwefelsäure, N-Ethyl-N'-(3-dimethylaminopropyl)carbodiimid und Dicyclohexylcarbodümid ausgewählt wird.

42. Verfahren zur Herstellung einer Kohlenstoff-Nanoröhren-Struktur nach Anspruch 37, wobei die Reaktion eine Substitutionsreaktion ist und der Zusatzstoff eine Base ist.

43. Verfahren zur Herstellung einer Kohlenstoff-Nanoröhren-Struktur nach Anspruch 42, wobei jede der funktionellen Gruppen mindestens eine funktionelle Gruppe ist, die aus der Gruppe ausgewählt wird, welche aus -NH₂, -X (X ist ein Halogenatom), -SH, -OH, -OSO₂CH₃ und -OSO₂(C₆H₄)CH₃ besteht.

44. Verfahren zur Herstellung einer Kohlenstoff-Nanoröhren-Struktur nach Anspruch 42, wobei die Base mindestens eine Art einer Base ist, die aus der Gruppe ausgewählt wird, welche aus Natriumhydroxid, Kaliumhydroxid, Pyridin und Natriumethoxid besteht.

45. Verfahren zur Herstellung einer Kohlenstoff-Nanoröhren-Struktur nach Anspruch 25, wobei die Reaktion eine Additionsreaktion ist.

46. Verfahren zur Herstellung einer Kohlenstoff-Nanoröhren-Struktur nach Anspruch 45, wobei jede der funktionellen Gruppen mindestens eine funktionelle Gruppe ist, die aus der Gruppe ausgewählt wird, welche aus -OH und/oder -NCO besteht.

47. Verfahren zur Herstellung einer Kohlenstoff-Nanoröhren-Struktur nach Anspruch 25, wobei die Reaktion eine Oxidationsreaktion ist.

48. Verfahren zur Herstellung einer Kohlenstoff-Nanoröhren-Struktur nach Anspruch 47, wobei jede der funktionellen Gruppen -SH ist.

49. Verfahren zur Herstellung einer Kohlenstoff-Nanoröhren-Struktur nach Anspruch 47, wobei die flüssige Lösung einen Beschleuniger für eine Oxidationsreaktion enthält.

50. Verfahren zur Herstellung einer Kohlenstoff-Nanoröhren-Struktur nach Anspruch 49, wobei der Beschleuniger für die Oxidationsreaktion Iod ist.

51. Kohlenstoff-Nanoröhren-Übertragungskörper, umfassend:
ein temporäres Substrat; und
eine Schicht einer Kohlenstoff-Nanoröhren-Struktur, die auf einer Oberfläche des temporären Substrats getragen wird, wobei die Schicht einer Kohlenstoff-Nanoröhren-Struktur eine Maschenstruktur ist, die durch gegenseitige Vernetzung einer Mehrzahl der Kohlenstoff-Nanoröhren durch vernetzte Positionen erhalten wird, welche von einer Mehrzahl der chemischen Bindungen zwischen den funktionellen Gruppen gebildet werden, wobei jede der funktionellen Gruppen mit unterschiedlichen Kohlenstoff-Nanoröhren der Mehrzahl der Kohlenstoff-Nanoröhren an mindestens einem Ende verknüpft ist, und die Schicht der Kohlenstoff-Nanoröhren-Struktur mit einer gewünschten Gestalt auf einen Grundkörper übertragen werden soll,
wobei das temporäre Substrat von dem Grundkörper entfernt wird, wenn die Schicht der Kohlenstoff-Nanoröhren-Struktur auf den Grundkörper übertragen wird.

52. Kohlenstoff-Nanoröhren-Übertragungskörper nach Anspruch 51, wobei jede der chemischen Bindungen zwischen der Mehrzahl der funktionellen Gruppen mindestens eine chemische Bindung ist, die aus der Gruppe ausgewählt wird, welche aus -COOCO-, -O-, -NHCÖ-, -COO- und -NCH- besteht.

53. Kohlenstoff-Nanoröhren-Übertragungskörper nach Anspruch 51, wobei jede der funktionellen Gruppen mindestens eine funktionelle Gruppe ist, die aus der Gruppe ausgewählt wird, welche aus -NH-, -S- und -O- besteht.

54. Kohlenstoff-Nanoröhren-Übertragungskörper nach Anspruch 51, wobei jede der chemischen Bindungen zwischen der Mehrzahl der funktionellen Gruppen
- NHCOO- ist.

55. Kohlenstoff-Nanoröhren-Übertragungskörper nach Anspruch 51, wobei jede der chemischen Bindungen zwischen der Mehrzahl der funktionellen Gruppen -S-S-ist.

56. Kohlenstoff-Nanoröhren-Übertragungskörper nach Anspruch 51, wobei die vernetzten Positionen der Schicht der Kohlenstoff-Nanoröhren-Struktur aus chemischen Bindungen gebildet werden, die dadurch erhalten werden, dass eine Reaktion zwischen den funktionellen Gruppen in einer flüssigen Lösung veranlasst wird, welche die Kohlenstoff-Nanoröhren mit den funktionellen Gruppen enthält.

57. Kohlänstoff-Nanoröhren-Übertragungskörper nach Anspruch 56, wobei die chemischen Bindungen durch eine Reaktion gebildet werden, die ausgewählt wird aus einer Kondensationsreaktion, einer Substitutionsreaktion, einer Additionsreaktion und einer Oxidationsreaktion.

58. Kohlenstoff-Nanoröhren-Übertragungskörper nach Anspruch 51, wobei ein Substrat, das Plastizität oder Flexibilität besitzt, als temporäres Substrat verwendet wird.

## Revendications

1. Procédé de fabrication d'une structure en nanotubes de carbone, comprenant les étapes consistant à :
fournir à un corps de base une solution liquide contenant des nanotubes de carbone qui ont des groupes fonctionnels ; et
réticuler la pluralité de nanotubes de carbone les uns aux autres en provoquant la formation par les groupes fonctionnels de liaisons chimiques entre eux de manière à former ainsi une structure maillée de la structure en nanotubes de carbone.

2. Procédé de fabrication d'une structure en nanotubes de carbone selon la revendication 1, dans lequel la solution liquide contient un additif qui provoque la formation par les groupes fonctionnels de liaisons chimiques entre eux.

3. Procédé de fabrication d'une structure en nanotubes de carbone selon la revendication 1 ou 2,
dans lequel l'étape de fourniture comprend une étape d'application pour appliquer la solution liquide au corps de base ; et
dans lequel la structure en nanotubes de carbone est sous la forme d'une couche.

4. Procédé de fabrication d'une structure en nanotubes de carbone selon la revendication 3, comprenant en outre l'étape consistant à former un motif de la couche de structure en nanotubes de carbone selon une forme souhaitée (une étape de formation de motif).

5. Procédé de fabrication d'une structure en nanotubes de carbone selon la revendication 4, dans lequel l'étape de formation de motif est une étape consistant à mettre en oeuvre une gravure à sec sur des régions de la couche de structure en nanotubes de carbone sur la surface du corps de base autres qu'une région devant recevoir un motif selon la forme souhaitée, en éliminant ainsi la couche de structure en nanotubes de carbone dans ces régions et en donnant à la couche de structure en nanotubes de carbone un motif selon la forme souhaitée.

6. Procédé de fabrication d'une structure en nanotubes de carbone selon la revendication 4, dans lequel l'étape de formation de motif comprend :
une étape de formation de couche de réserve consistant à former une couche de réserve sur la région de la couche de structure en nanotubes de carbone sur la surface de corps de base qui doit recevoir un motif ayant la forme souhaitée ; et
une étape d'élimination consistant à éliminer par gravure à sec les parties exposées de la couche de structure en nanotubes de carbone qui ne sont pas recouvertes par la couche de réserve.

7. Procédé de fabrication d'une structure en nanotubes de carbone selon la revendication 6, dans lequel un côté du corps de base où la couche de structure en nanotubes de carbone et la couche de réserve sont stratifiées est irradié avec des radicaux de molécules d'oxygène dans l'étape d'élimination.

8. Procédé de fabrication d'une structure en nanotubes de carbone selon la revendication 6 ou 7, dans lequel le côté du corps de base où la couche de structure en nanotubes de carbone et la couche de réserve sont stratifiées est irradié avec des radicaux oxygène qui sont générés par irradiation de molécules d'oxygène avec des rayons ultraviolets.

9. Procédé de fabrication d'une structure en nanotubes de carbone selon la revendication 6, dans lequel l'étape d'élimination lors de l'étape de formation de motif est suivie d'une étape de pelage de couche de réserve pour retirer par pelage la couche de réserve qui a été formée lors de l'étape de formation de couche de réserve.

10. Procédé de fabrication d'une structure en nanotubes de carbone selon la revendication 6, dans lequel la couche de réserve est une couche de résine.

11. Procédé de fabrication d'une structure en nanotubes de carbone selon la revendication 5, dans lequel l'étape de formation de motif est une étape consistant à effectuer une irradiation sélective avec des faisceaux ioniques d'ions de molécules de gaz sur des régions de la couche de structure en nanotubes de carbone sur la surface de corps de base autres que la région devant recevoir un motif selon une forme souhaitée, en éliminant ainsi la couche de structure en nanotubes de carbone sur les régions irradiées et en dotant la couche de structure en nanotubes de carbone d'un motif ayant la forme souhaitée.

12. Procédé de fabrication d'une structure en nanotubes de carbone selon la revendication 2, dans lequel la réaction est une réaction de condensation par déshydratation et l'additif est un agent de condensation.

13. Procédé de fabrication d'une structure en nanotubes de carbone selon la revendication 12, dans lequel chacun des groupes fonctionnels est au moins un groupe fonctionnel choisi dans l'ensemble constitué par -COOR (R est un groupe hydrocarboné substitué ou non substitué), -COOH, -COX (X est un atome d'halogène), -OH, -CHO et -NH₂.

14. Procédé de fabrication d'une structure en nanotubes de carbone selon la revendication 13, dans lequel chacun des groupes fonctionnels est -COOH.

15. Procédé de fabrication d'une structure en nanotubes de carbone selon la revendication 12, dans lequel l'agent de condensation est au moins un composé choisi dans l'ensemble constitué par l'acide sulfurique, le N-éthyl-N'-(3-diméthylaminopropyl)carbodiimide et le dicyclohexylcarbodiimide.

16. Procédé de fabrication d'une structure en nanotubes de carbone selon la revendication 2, dans lequel la réaction est une réaction de substitution et l'additif est une base.

17. Procédé de fabrication d'une structure en nanotubes de carbone selon la revendication 16, dans lequel la base est au moins une base choisie dans l'ensemble constitué par l'hydroxyde de sodium, l'hydroxyde de potassium, la pyridine et l'éthylate de sodium.

18. Procédé de fabrication d'une structure en nanotubes de carbone selon la revendication 1, dans lequel la réaction est une réaction d'addition.

19. Procédé de fabrication d'une structure en nanotubes de carbone selon la revendication 18, dans lequel chacun des groupes fonctionnels est au moins un groupe fonctionnel choisi dans l'ensemble constitué par -OH et/ou -NCO.

20. Procédé de fabrication d'une structure en nanotubes de carbone selon la revendication 1, dans lequel la réaction est une réaction d'oxydation.

21. Procédé de fabrication d'une structure en nanotubes de carbone selon la revendication 20, dans lequel chacun des groupes fonctionnels est -SH.

22. Procédé de fabrication d'une structure en nanotubes de carbone selon la revendication 20, dans lequel la solution liquide contient un accélérateur de réaction d'oxydation.

23. Procédé de fabrication d'une structure en nanotubes de carbone selon la revendication 22, dans lequel l'accélérateur de réaction d'oxydation est l'iode.

24. Procédé de fabrication d'une structure en nanotubes de carbone selon la revendication 1, dans lequel chacun parmi la pluralité de nanotubes de carbone est un nanotube de carbone à parois multiples.

25. Procédé de fabrication d'une structure en nanotubes de carbone comprenant les étapes consistant à :
appliquer une solution liquide contenant des nanotubes de carbone qui ont des groupes fonctionnels à une surface d'un substrat temporaire ;
réticuler la pluralité de nanotubes de carbone les uns aux autres en provoquant la formation par les groupes fonctionnels de liaisons chimiques entre eux de manière à former ainsi une structure maillée d'une couche de structure en nanotubes de carbone ;
former un motif de la couche de structure en nanotubes de carbone selon une forme souhaitée ; et
transférer la couche de structure en nanotubes de carbone pourvue d'un motif à un corps de base.

26. Procédé de fabrication d'une structure en nanotubes de carbone selon la revendication 25, dans lequel un substrat doté d'une plasticité ou d'une flexibilité est utilisé en tant que corps de base.

27. Procédé de fabrication d'une structure en nanotubes de carbone selon la revendication 25, dans lequel l'étape de transfert est suivie d'une étape de fixation de motif dans laquelle la couche de structure en nanotubes de carbone pourvue d'un motif, qui est transférée à la surface de corps de base, est fixée, conjointement avec le corps de base, à un deuxième corps de base.

28. Procédé de fabrication d'une structure en nanotubes de carbone selon la revendication 25, dans lequel l'étape de transfert est une étape consistant à transférer la couche de structure en nanotubes de carbone pourvue d'un motif sur la surface de substrat temporaire à une surface d'un corps de transfert intermédiaire et à transférer au corps de base la couche de structure en nanotubes de carbone qui a été transférée à la surface de corps de transfert intermédiaire.

29. Procédé de fabrication d'une structure en nanotubes de carbone selon la revendication 25, dans lequel l'étape de réticulation comprend une étape consistant à chauffer la couche de structure en nanotubes de carbone, formée sur la surface de substrat temporaire, à une température inférieure au point de fusion du substrat temporaire et supérieure ou égale au point de fusion ou à la température de transition vitreuse du corps de base afin de durcir la solution liquide appliquée.

30. Procédé de fabrication d'une structure en nanotubes de carbone selon la revendication 28, dans lequel l'étape de réticulation comprend une étape consistant à chauffer la couche de structure en nanotubes de carbone, formée sur la surface de substrat temporaire, à une température inférieure au point de fusion du substrat temporaire et supérieure ou égale au point de fusion ou à la température de transition vitreuse du corps de transfert intermédiaire afin de durcir la solution liquide appliquée.

31. Procédé de fabrication d'une structure en nanotubes de carbone selon la revendication 25, dans lequel l'étape de formation de motif est une étape consistant à effectuer une gravure à sec sur des régions de la couche de structure en nanotubes de carbone, sur la surface de substrat temporaire, autres qu'une région devant recevoir un motif ayant une forme souhaitée, en éliminant ainsi la couche de structure en nanotubes de carbone sur ces régions et en donnant à la structure en nanotubes de carbone un motif selon la forme souhaitée.

32. Procédé de fabrication d'une structure en nanotubes de carbone selon la revendication 31, dans lequel le corps de base ne présente pas de résistance à la gravure à sec lors de l'étape de formation de motif, tandis que le substrat temporaire est résistant à la gravure à sec.

33. Procédé de fabrication d'une structure en nanotubes de carbone selon la revendication 28, dans lequel l'étape de formation de motif est une étape consistant à effectuer une gravure à sec sur des régions de la couche de structure en nanotubes de carbone, sur la surface de substrat temporaire, autres qu'une région devant recevoir un motif ayant une forme souhaitée, en éliminant ainsi la couche de structure en nanotubes de carbone sur ces régions et en donnant à la structure en nanotubes de carbone un motif selon la forme souhaitée, et
dans lequel le corps de base ne présente pas de résistance à la gravure à sec lors de l'étape de formation de motif, tandis que le substrat temporaire est résistant à la gravure à sec.

34. Procédé de fabrication d'une structure en nanotubes de carbone selon la revendication 25, dans lequel l'étape de formation de motif comprend :
une étape de formation de couche de réserve consistant à former une couche de réserve sur une région de la couche de structure en nanotubes de carbone sur la surface de substrat temporaire qui doit recevoir un motif ayant une forme souhaitée ; et
une étape d'élimination pour mettre un agent de gravure en contact avec un côté du substrat temporaire où la couche de structure en nanotubes de carbone et la couche de réserve sont stratifiées, en éliminant ainsi la couche de structure en nanotubes de carbone sur les régions exposées qui ne sont pas recouvertes de la couche de réserve.

35. Procédé de fabrication d'une structure en nanotubes de carbone selon la revendication 34, dans lequel le corps de base ne présente pas de résistance à l'agent de gravure utilisé lors de l'étape de formation de motif, tandis que le substrat temporaire est résistant à l'agent de gravure.

36. Procédé de fabrication d'une structure en nanotubes de carbone selon la revendication 25, dans lequel l'étape de formation de motif comprend :
une étape de formation de couche de réserve consistant à former une couche de réserve sur une région de la couche de structure en nanotubes de carbone sur la surface de substrat temporaire qui doit recevoir un motif ayant une forme souhaitée ; et
une étape d'élimination pour mettre un agent de gravure en contact avec un côté du substrat temporaire où la couche de structure en nanotubes de carbone et la couche de réserve sont stratifiées, en éliminant ainsi la couche de structure en nanotubes de carbone sur les régions exposées qui ne sont pas recouvertes de la couche de réserve,
dans lequel le corps de base ne présente pas de résistance à l'agent de gravure utilisé lors de l'étape de formation de motif, tandis que le substrat temporaire est résistant à l'agent de gravure.

37. Procédé de fabrication d'une structure en nanotubes de carbone selon la revendication 25, dans lequel la solution liquide contient un additif qui provoque la formation par les groupes fonctionnels de liaisons chimiques entre eux.

38. Procédé de fabrication d'une structure en nanotubes de carbone selon la revendication 37, dans lequel la réaction est une réaction de condensation par déshydratation et l'additif est un agent de condensation.

39. Procédé de fabrication d'une structure en nanotubes de carbone selon la revendication 38, dans lequel chacun des groupes fonctionnels est au moins un groupe fonctionnel choisi dans l'ensemble constitué par -COOR (R est un groupe hydrocarboné substitué ou non substitué), -COOH, -COX (X est un atome d'halogène), -OH, -CHO et -NH₂.

40. Procédé de fabrication d'une structure en nanotubes de carbone selon la revendication 39, dans lequel chacun des groupes fonctionnels est -COOH.

41. Procédé de fabrication d'une structure en nanotubes de carbone selon la revendication 38, dans lequel l'agent de condensation est choisi parmi l'un quelconque de l'acide sulfurique, le N-éthyl-N'-(3-diméthyl-aminopropyl)carbodiimide et le dicyclohexylcarbodiimide.

42. Procédé de fabrication d'une structure en nanotubes de carbone selon la revendication 37, dans lequel la réaction est une réaction de substitution et l'additif est une base.

43. Procédé de fabrication d'une structure en nanotubes de carbone selon la revendication 42, dans lequel chacun des groupes fonctionnels est au moins un groupe fonctionnel choisi dans l'ensemble constitué par -NH₂, -X (X est un atome d'halogène), -SH, -OH, -OSO₂CH₃ et -OSO₂(C₆H₄)CH₃.

44. Procédé de fabrication d'une structure en nanotubes de carbone selon la revendication 42, dans lequel la base est au moins un type de base choisi dans l'ensemble constitué par l'hydroxyde de sodium, l'hydroxyde de potassium, la pyridine, et l'éthylate de sodium.

45. Procédé de fabrication d'une structure en nanotubes de carbone selon la revendication 25, dans lequel la réaction est une réaction d'addition.

46. Procédé de fabrication d'une structure en nanotubes de carbone selon la revendication 45, dans lequel chacun des groupes fonctionnels est au moins un groupe fonctionnel choisi dans l'ensemble constitué par -OH et/ou -NCO.

47. Procédé de fabrication d'une structure en nanotubes de carbone selon la revendication 25, dans lequel la réaction est une réaction d'oxydation.

48. Procédé de fabrication d'une structure en nanotubes de carbone selon la revendication 47, dans lequel chacun des groupes fonctionnels est -SH.

49. Procédé de fabrication d'une structure en nanotubes de carbone selon la revendication 47, dans lequel la solution liquide contient un accélérateur de réaction d'oxydation.

50. Procédé de fabrication d'une structure en nanotubes de carbone selon la revendication 49, dans lequel l'accélérateur de réaction d'oxydation est l'iode.

51. Corps de transfert de nanotubes de carbone, comprenant :
un substrat temporaire ; et
une couche de structure en nanotubes de carbone portée sur une surface du substrat temporaire, la couche de structure en nanotubes de carbone constituant une structure maillée par réticulation d'une pluralité de nanotubes de carbone les uns aux autres par l'intermédiaire de sites réticulés formés à partir d'une pluralité de liaisons chimiques entre des groupes fonctionnels, chacun des groupes fonctionnels sur des nanotubes de carbone différents de la pluralité de nanotubes de carbone sur au moins une extrémité, la couche de structure en nanotubes de carbone ayant une forme souhaitée devant être transférée à un corps de base,
dans lequel le substrat temporaire est éliminé du corps de base lorsque la couche de structure en nanotubes de carbone est transférée au corps de base.

52. Corps de transfert de nanotubes de carbone selon la revendication 51, dans lequel chacune des liaisons chimiques entre la pluralité de groupes fonctionnels est au moins une liaison chimique choisie dans l'ensemble constitué par -COOCO-, -O-, -NHCO-, -COO- et -NCH-.

53. Corps de transfert de nanotubes de carbone selon la revendication 51, dans lequel chacun des groupes fonctionnels est au moins un groupe fonctionnel choisi dans l'ensemble constitué par -NH-, -S- et -O-.

54. Corps de transfert de nanotubes de carbone selon la revendication 51, dans lequel chacune des liaisons chimiques entre la pluralité de groupes fonctionnels est -NHCOO-.

55. Corps de transfert de nanotubes de carbone selon la revendication 51, dans lequel chacune des liaisons chimiques entre la pluralité de groupes fonctionnels est -S-S-.

56. Corps de transfert de nanotubes de carbone selon la revendication 51, dans lequel les sites réticulés de la couche de structure en nanotubes de carbone sont formés à partir de liaison chimiques qui sont obtenues par l'opération consistant à engendrer une réaction entre les groupes fonctionnels dans une solution liquide qui contient les nanotubes de carbone ayant les groupes fonctionnels.

57. Corps de transfert de nanotubes de carbone selon la revendication 56, dans lequel les liaisons chimiques sont formées par l'une quelconque parmi une réaction de condensation, une réaction de substitution, une réaction d'addition et une réaction d'oxydation.

58. Corps de transfert de nanotubes de carbone selon la revendication 51, dans lequel un substrat doté d'une plasticité ou d'une flexibilité est utilisé en tant que substrat temporaire.
